(19) Europäisches Patentamt
European Patent Office
Office européen des brevets

(11) **EP 2 726 847 B1**

(12) **EUROPÄISCHE PATENTSCHRIFT**

(45) Veröffentlichungstag und Bekanntmachung des Hinweises auf die Patenterteilung:
**19.02.2020 Patentblatt 2020/08**

(21) Anmeldenummer: **12733081.9**

(22) Anmeldetag: **02.07.2012**

(51) Int Cl.:
*G01N 21/03* [(2006.01)]  *G01N 21/15* [(2006.01)]
*G01N 21/09* [(2006.01)]  *G01N 21/31* [(2006.01)]
*G01N 21/3504* [(2014.01)]  *G01N 21/61* [(2006.01)]

(86) Internationale Anmeldenummer:
**PCT/EP2012/062843**

(87) Internationale Veröffentlichungsnummer:
**WO 2013/004664 (10.01.2013 Gazette 2013/02)**

(54) **VORRICHTUNG MIT EINER MESSANORDNUNG ZUR OPTISCHEN MESSUNG VON GASEN UND GASGEMISCHEN MIT KOMPENSATION VON UMGEBUNGSEINFLÜSSEN**

DEVICE WITH A MEASUREMENT ARRANGEMENT FOR OPTICAL MEASUREMENT OF GASES AND GAS MIXTURES, WITH COMPENSATION OF ENVIRONMENTAL INFLUENCES

DISPOSITIF COMPRENANT UN SYSTÈME DE MESURE OPTIQUE DE GAZ ET DE MÉLANGES GAZEUX COMPENSANT LES INFLUENCES DE L'ENVIRONNEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.07.2011 DE 202011102765 U**

(43) Veröffentlichungstag der Anmeldung:
**07.05.2014 Patentblatt 2014/19**

(73) Patentinhaber: **Dräger Safety AG & Co. KGaA**
**23560 Lübeck (DE)**

(72) Erfinder:
• **STOCK, Burkhard**
**19217 Carlow (DE)**
• **HAACK, Nils**
**23564 Lübeck (DE)**
• **DIEKMANN, Wilfried**
**19217 Utecht (DE)**
• **LANGE, Björn**
**23923 Teschow (DE)**

(74) Vertreter: **Uexküll & Stolberg**
**Partnerschaft von**
**Patent- und Rechtsanwälten mbB**
**Beselerstraße 4**
**22607 Hamburg (DE)**

(56) Entgegenhaltungen:
**EP-A2- 0 930 496      WO-A1-2010/118748**
**WO-A2-2006/068781      US-B1- 6 469 303**

## Beschreibung

Die Erfindung betrifft eine Vorrichtung zur optischen Erfassung eines Zielgases in Luftgasgemischen mit Kompensation von Umgebungseinflüssen.

Die Möglichkeit zur Analyse gasförmiger Gemische ist in der Überwachung industrieller Anlagen eine wesentliche Randbedingung für einen fehlerfreien und sicheren Betrieb, insbesondere vor dem Hintergrund des zunehmenden Automatisierungsgrades. Um beispielsweise in größeren Industrieanlagen, in petrochemischen Anlagen oder auf Bohrinseln im Fehlerfall austretende Gase möglichst exakt und rasch erkennen zu können, ist es wünschenswert, direkt an den Orten möglicher Fehlerfälle den Austritt von gesundheits-gefährdenden Gasen selbst in geringen Konzentrationen mit einer hohen Messempfindlichkeit zu detektieren.

Optische Gasdetektorsysteme sind zur Erfassung von geringen Konzentrationen mit einer hohen Messempfindlichkeit besonders geeignet.

Aus dem Stand der Technik sind optische Gasdetektorsysteme bekannt, welche als punktuelle Messstationen an mehreren Messpunkten in einem abgegrenzten Bereich einer Industrieanlage oder in eine großflächigen Bereich verteilt angeordnet sind.

Diese optischen Gasdetektorsysteme mit optischen Punktdetektoren bestehen aus einer Lichtquelle, einer vom Licht durchstrahlten Messküvette, einem schmalbandigen optischen Filter und einem Detektor zur Messung der Lichtintensität. Absorption von Licht durch das zu messende Gas führt zu reduziertem Detektorsignal, das als Messgröße ausgewertet wird.

Weiterhin sind aus dem Stand der Technik Gasmesssysteme bekannt, mit denen Gaskonzentrationen größerer Areale oder Flächen erfasst werden. Solche Systeme bestehen aus einem Sender mit einer Lichtquelle und einem ausgerichteten Empfänger mit Detektor, sowie weiteren optischen Elementen zur Lichtstrahlführung. Dabei durchläuft der Lichtstrahl vom Sender zum Empfänger als optische Messstrecke Entfernungen im Bereich von einigen wenigen Metern bis hin zu 50 Metern, 200 Metern oder auch mehr. Eine solche, auch Open-Path-Messsystem genannte Messeinrichtung ist in der US 6 455 854 B1 dargestellt.

Eine Anordnung mit einer, mit dem Umgebungsgas kommunizierenden Messküvette ist in der US 5 923 035 B1 beschrieben. Die Messküvette bildet eine optische Messstrecke zwischen einer Lichtquelle und einem Detektor. Der mittlere zurückgelegte Weg des Lichtstrahls in der Küvette bestimmt die optische Messstrecke und damit die optische Weglänge der Messanordnung, dabei kann eine Anordnung gewählt sein, in der Lichtquelle und Detektor direkt gegenüberliegend angeordnet sind. In einer Anordnung mit baulich an derselben Seite angeordneter Lichtquelle und Detektor können einer oder mehrere Spiegel zur Strahlumlenkung oder zu einer Verlängerung der optischen Weglänge angeordnet sein, oder es können die Wände der Küvette derart reflektierend ausgebildet und angeordnet sein, dass sich darüber eine Spiegelung und/oder eine mehrfache Reflexion in der Küvette ergibt, welche die optische Weglänge von der Lichtquelle zum Detektor verlängert. In einer solchen Art ausgebildete Küvetten werden im Stand der Technik auch Multireflexionszellen genannt. Solche Multireflexionszellen sind in der überwiegenden Zahl der Ausführungen innenseitig an der Wandung komplett reflektierend ausgeführt, sodass bei Verwendung einer Strahlungsquelle mit nicht ausgerichtetem Lichtstrahl ein Teil der ungerichtet abgestrahlten Lichtmenge durch mehrfache Reflexion an der Wandung auf einem längeren Weg zum Detektor gelangt. Ein weiterer Teil der Lichtmenge gelangt, lediglich einfach reflektiert, auf einem kürzeren Weg zum Detektor. Eine Anordnung zu einer örtlich begrenzten Messung an einem Messpunkt gemäß der US 5 923 035 B1 wird in Unterscheidung zu einer Open-Path-Anordnung gemäß der US 6 455 854 B1 als ein sogenannter Punkt-Detektor benannt, da mit einer solchen Messanordnung lokal begrenzte Messungen durchführbar sind. So kann beispielsweise über eine räumlich verteilte Anordnung einer Vielzahl solcher Punktdetektoren an mehreren Messpunkten ein Industrie-Areal gezielt und spezifisch überwacht werden. Eine besondere Form eines solchen Punktdetektors ist ein mobiles Handmessgerät, für räumlich begrenzte, d.h. punktuelle Messaufgaben, mit der Besonderheit, dass der Messpunkt vom Anwender variabel und mobil gewählt werden kann.

Die durch die Messanordnung messbare Intensität des am Detektor erfassten Lichtstrahls wird durch die Absorptionseigenschaften des in der Küvette befindlichen Gases oder Gasgemisches und die Länge der optischen Weglänge bestimmt. Aus dem erfassten Spektrum und der Signalintensität einzelner Wellenlängen im Spektrum kann dann sehr präzise auf das Vorhandensein und die Konzentration bestimmter Gaskomponenten bzw. Gasarten im Bereich der Messstrecke geschlossen werden.

Je nach Messaufgabe ist dabei die optische Weglänge durch die baulichen Gegebenheiten der Messumgebung festgelegt. In einer Messanordnung zur Verwendung bei einer lokal begrenzten Einpunktmessung zur Konzentrationsmessung geben die baulichen Gegebenheiten wie Gehäuseabmessungen und Länge der Küvette die optische Weglänge in einem Bereich von wenigen Zentimetern, beispielsweise von 3 cm bis 23 cm, vor. In Messanordnungen mit Multireflexionszellen, in denen das Licht von der Strahlungsquelle ausgehend in die Küvette emittiert wird, an der gegenüberliegenden Wand und an den seitlichen Wandungen reflektiert wird und zum neben der Strahlungsquelle angeordneten Detektor gelangt, ergeben sich neben der optischen Weglänge als Zweifaches der Küvettenbaulänge bei Verwendung einer Strahlungsquelle mit nicht ausgerichtetem Lichtstrahl statistisch weitere optische Wege durch die entstehende mehrfache Reflexion. Damit ergibt sich eine mittlere optische Weglänge, die größer ist, als durch die eigentliche Baulänge bedingt. So ergibt sich beispielsweise bei einer Küvettenbaulänge mit einem Innenmaß von 5 cm eine effektive optische Weglänge von 7 cm bis 50 cm, je nach Konstruktion und Reflexionseigenschaften der Multireflexionszelle. In einer Anwendung zur Konzentrationsmessung mittels eines Open-Path-Messsystems im Freifeld ist die optische Weglänge im Bereich von einigen Metern bis zu mehr als 50 Metern bis hin zu 200 Metern oder auch darüber hinaus gegeben.

Zu einer hoch aufgelösten und spezifischem Messung der Konzentration eines bestimmten Gases ergeben sich aus diesen baulichen Gegebenheiten Auslegungskriterien und Auswahlkriterien für die Wahl einer geeigneten Messwellenlänge $\lambda_M$. Prinzipiell ist dabei gewünscht, dass bei Vorhandensein einer Konzentration des Zielgases im Gasgemisch eine möglichst große Empfindlichkeit über den gesamten Messbereich gegeben ist.

Weiterhin sind Multireflexionszellen vorteilhaft in der Weise, dass als Lichtquelle kein kollimierter Lichtstrahl erforderlich ist wie in einer Open-Path-Freifeld-Anordnung gemäß der US 6 455 854 B1, in der Lichtquelle (Sender) und Detektor (Empfänger) zueinander genau ausgerichtet werden müssen und der Lichtstrahl an sich, beispielsweise durch einer Laserlichtquelle, ausgerichtet wird, oder zusätzliche optische Komponenten, wie Linsen und/oder Spiegel zur Fokussierung, Lenkung und Umlenkung des Lichts bei Verwendung einer Lichtquelle ohne eine in der Lichtquelle selbst bedingte Strahlkollimation vorhanden sind. Multireflexionszellen sind in besonderer Weise vorteilhaft für den praktischen Einsatz, da, anders als im Falle einer Konstruktion mit Spiegelelementen als einem einzelnen Reflexions-Punkt bei einer Verschmutzung des einzigen Spiegelelementes, die Messung bei partieller Verschmutzung der reflektierenden Oberflächen in der Küvette noch weiterhin möglich ist. Diese Unempfindlichkeit gegenüber örtlich begrenzten lokalen Verschmutzungen ergibt sich dadurch, dass, da das Licht von der Lichtquelle ungerichtet in die Multireflexionszellen eingekoppelt wird, statistisch örtlich zufällige und variierende Reflexionen an den reflektierenden Oberflächen, sowohl als Einfach-, Zweifach- und auch Mehrfach-Reflexionen, ergeben, bevor das Licht auf den Detektor gelangt. Dadurch wird eine örtlich begrenzte lokale Verschmutzung durch die statistisch zufälligen und ständig variierenden Reflexionen nicht als Nachteil für die Gaskonzentrationsmessung wirksam.

In einer praktischen Umsetzung mit einem interessierenden Messbereich einer Überwachung von Explosionsgrenzen eines Zielgases ist es dazu vorteilhaft, dass beispielsweise die Anwesenheit eines Zielgas in der Messküvette mit einer der unteren Explosionsgrenze entsprechenden Konzentration eine Lichtabsorption bewirkt, welche beispielsweise für das Zielgas Methan eine Verminderung des Signals am Detektor im Bereich von ungefähr 10% bis 15 % hervorruft. Weiterhin ist eine möglichst gleichmäßige Steigung der Kennlinie der Lichtabsorption, bzw. der Verminderung des Signals am Detektor über den interessierenden Messbereich wünschenswert. Diese ergibt einerseits einen deutlichen durch das Zielgas bedingten Messeffekt, andererseits kann eine weitere Lichtabsorption bedingt durch Querempfindlichkeiten gegenüber anderen Gasen und Einfluss durch Umgebungsbedingungen wie Temperaturschwankungen, Luftdruckeinfluss und Feuchteeinfluss in Kauf genommen werden, ohne dass das Licht beispielsweise durch Kondensat nahezu vollständig auf der optischen Weglänge absorbiert werden kann.

Damit dieses Auslegungskriterium bezüglich der Lichtabsorption erreicht werden kann, sind spezifisch zum Messgas geeignete Messwellenlängen in Kombination mit geeigneten optischen Weglängen auszuwählen.

Damit geringe Konzentrationen mit hoher Messempfindlichkeit messbar sind, ist es erforderlich, die Konstruktion der Messanordnung und die Anpassung der Komponenten der Messanordnung zueinander an die Messaufgabe, an die Umgebungsbedingungen für den Betrieb der Messanordnung sehr exakt vorzunehmen. Wesentlich für eine hohe Empfindlichkeit der Messung und für eine spezifische Selektivität auf bestimmte Zielgase ist die Auslegung der Messwellenlänge auf das Zielgas und auf die optische Weglänge der Messstrecke in der Küvette. Die Baugröße der Küvette ist wesentlich durch den verfügbaren Bauraum des Gasmessgerätes vorgegeben, wobei für mobile Gasmessgeräte dem zur Verfügung stehenden Bauraum hinsichtlich der Anwendbarkeit im mobilen Einsatz Grenzen gesetzt sind. Die Länge der Messstrecke innerhalb der Küvette ist einerseits durch die Lichtverluste auf der Messstrecke selbst und die Lichtabsorption durch das Zielgas beschränkt, weitere wesentliche Einschränkungen ergeben sich aus den Verlusten, die durch die optischen Komponenten auftreten und die durch die Empfindlichkeit des verwendeten Detektors bedingt sind.

Eine wesentliche Einflussgröße hinsichtlich der Präzision der Messanordnung ist die Möglichkeit von Messverfälschungen durch die Umweltbedingungen wie Kälte, Hitze und Feuchtigkeit. Eine prinzipielle Möglichkeit, die Feuchtigkeit in der Küvette bei einem Einsatz in feuchter Messumgebung zu reduzieren, sind eine Absenkung der relativen Feuchtigkeit innerhalb der Küvette und eine Vermeidung von Kondensatbildung an den Wänden der Küvette, wie auch auf Lichtquelle und Detektor.

Dazu ist nach dem Stand der Technik eine Beheizung der Optik eine bekannte und wirksame Methode, wie es beispielsweise in der US 7 406 854 B1 beschrieben ist.

Für den Einsatz der Messanordnung in explosionsgefährdeten Bereichen ist eine solche Beheizung nicht ganz unkritisch. Um eine Explosion des gegebenenfalls explosiven Umgebungsgases durch eventuelle elektrische Funken oder eine Energieentladung in der Messanordnung zu vermeiden, ist es konstruktiv zwingend erforderlich, dass kein Funken oder keine kritische Menge an Energie, welche eine Zündung eines Gasgemisches in der Messumgebung verursachen könnte, aus der Messanordnung in die Messumgebung übertreten kann. Weiterhin muss, falls es zu einer Explosion in der Messanordnung selbst kommt, die Explosion auf die Messanordnung selbst beschränkt bleiben und darf nicht in die Messumgebung übertreten oder überschlagen. Dazu wird der Gaszutritt aus der Messumgebung zur und in die Messküvette hinein über ein Schutzelement besonders gesichert ausgeführt. In einer solchen explosionsgeschützten Ausführung ist der Gaszutritt mit einem besonderen Schutzelement versehen.

Aus der US 7 285 782 B1 ist ein Gassensor in einer explosionsgeschützten Ausführung bekannt, wobei der Gasaustausch über eine Gasaustauschöffnung erfolgt, welche mit einem aus einem Sintermaterial oder aus einer Metallgaze bestehenden Staubund Feuchteschutzfilter als Schutzelement versehen ist.

Der in der US 7 285 782 B1 beschriebene Gassensor besitzt in einer erweiterten Ausführung einen Infrarot-Detektor mit mindestens einem gasspezifischen Messkanal $\lambda 1$, $\lambda 2$, $\lambda 3$, sowie einen Referenzkanal $\lambda 0$, der ein Nullsignal aufweist, also ein Signal ohne Beeinflussung durch das Zielgas. Zur Berücksichtigung und Kompensation von Umgebungseinflüssen sind am Infrarot-Detektor zusätzlich ein Temperatur-, ein Feuchtesensor und ein Drucksensor vorgesehen.

Trotz eines Schutzelementes an der Gasaustauschöffnung kann die Beheizung für eine Messanordnung in explosionsgeschützten Ausführung nur mit einer mäßigen Energiemenge vorgenommen werden, so dass beispielsweise eine Temperaturerhöhung von 5°C bis 10°C gegenüber der Umgebungstemperatur erreicht wird. Eine Temperaturerhöhung von 10°C in der Messküvette bei einer Umgebungstemperatur von 10°C und einer relativen Luftfeuchtigkeit von 100% verursacht eine Verminderung der relativen Luftfeuchtigkeit auf ungefähr 70% - 80%, so dass eine Kondensatbildung verhindert wird. Jede Verminderung der relativen Luftfeuchtigkeit in der Messküvette bewirkt in prinzipieller Weise eine Verminderung der Beeinträchtigungen der Messung durch Kondensat oder Wassertröpfchen in der Küvette.

Aus Messversuchen hat sich ergeben, dass sich insbesondere bei Messanordnungen zur infrarot-optischen Messung von Gasen und Gasgemischen in einer konstruktiven Ausbildung als Multireflexionszellen in explosionsgeschützten Ausführung mit einem Schutzelement und trotz einer Beheizung eine Beeinflussung der Messung gegeben ist, wenn die Messanordnung im Betrieb zuvor oder dabei einer feuchten Messumgebung ausgesetzt war oder ist.

Eine Lösung hinsichtlich einer Vermeidung von Kondensat für eine Messanordnung in einer nicht-explosionsgeschützten Ausführung ist auf eine einfache Weise dadurch zu erreichen, die Beheizung deutlich zu verstärken und dadurch die Messküvette soweit zu erwärmen, dass die relative Luftfeuchtigkeit in der Messküvette auf Werte zwischen 5% und 10% relativer Luftfeuchtigkeit abgesenkt wird. Dies hat in jedem Fall für eine solche Messanordnung einen unerwünscht erhöhten Energieverbrauch zur Folge.

Für mobile Geräte, sowohl in explosionsgeschützter Ausführung, wie auch in nicht explosionsgeschützter Ausführung, ist eine jegliche Erhöhung der Heizleistung im Betrieb allerdings mit dem Nachteil verbunden, dass entweder die dafür erforderliche elektrische Energiemenge zusätzlich in Form eines Energiespeichers (Batterien, wieder aufladbare Batterien) mitgeführt werden muss, was in einem für mobile Anwendungen ungünstigen Mehrgewicht resultieren würde, oder, dass ohne eine Erhöhung des Gerätegewichtes die verfügbare Betriebsdauer im mobilen Einsatz verkürzt wird, was bei den Anwendungsszenarien mobiler Gasmessgeräte im praktischen Einsatz nicht realistisch ist.

Für eine Messanordnung in einer explosionsgeschützten Ausführung müssen die Explosions- Schutzmassnahmen massiv verstärkt werden, was neben einem insgesamt erhöhten Gewicht und Bauvolumen, ebenfalls wieder mit Nachteilen für den mobilen Einsatz verbunden, zusätzlich noch Folgen für die Konstruktion und Auslegung des Schutzelementes am Gaseinlass hat. Dieses Schutzelement aus Sinter, Metallsinter oder Metallgaze muss dann, wie auch die übrigen Gehäusekomponenten der Messanordnung, konstruktiv so ausgebildet werden, dass die für die Beheizung bereitgestellte Energiemenge im Fehlerfall in der Messanordnung zurückgehalten werden kann. Dadurch bedingt ergibt sich ein sehr massive Konstruktion für das Schutzelement, welche den Gaszutritt erschwert und die Messeigenschaften nachteilig verändert, besonders das Ansprechverhalten bei einem Gaswechsel, üblicherweise charakterisiert durch die sogenannte $t_{10-90}$-Zeit, wird durch die benötigte länger dauernde Diffusionszeit des Gases durch das Schutzelement dahingehend nachteilig beeinflusst, dass die Warnfunktion der Messanordnung nach einem Konzentrationswechsel in der Messumgebung nicht zeitnah genug erfolgt. Unter der $t_{10-90}$-Zeit ist für eine Gasmessanordnung diejenige Zeit zu verstehen, eine Gaskonzentrationsänderung von 10 % einer Zielgaskonzentration auf 90 % einer Zielgaskonzentration zu erfassen, auszugeben und anzuzeigen. Weitere Schwierigkeiten in der Realisierung ergeben sich für den Einsatz der Messanordnung in explosions- geschützten Bereichen, da durch normative Anforderungen die mitgeführte Energiemenge und die Temperaturen von Elementen in den Messanordnungen begrenzt werden.

Damit ist die Möglichkeit einer nahezu vollständigen Kondensatvermeidung mittels einer Erhöhung der Heizleistung unter Bewirkung einer deutlichen Verminderung der relativen Luftfeuchtigkeit in der Messküvette auf Werte zwischen 5% und 10% sowohl für eine Messanordnung in einer nicht- explosionsgeschützten, wie auch für eine Messanordnung in einer explosionsgeschützten Ausführung, in einer praktischen Realisierung nicht gegeben.

Eine Vorrichtung und ein Verfahren zur Kompensation von Umwelteinflüssen mittels zweier Referenzwellenlängen ist für ein Open-Path-Messsystem mit einer optischen Weglänge von einem bis zu eintausend Metern in der US 6 455 854 B1 beschrieben. Es wird dabei für die Messung von Alkanen ein für die optischen Weglänge von einem bis zu eintausend Metern geeigneter Wellenlängenbereich von 2100 nm bis 2400 nm mit einer Messwellenlänge und zwei Referenzwellenlängen genutzt. Die Referenzwellenlängen zeichnen sich dadurch aus, dass sie prinzipiell keinerlei Einfluss durch das Messgas oder durch andere Gase der Messumgebung unterliegen. Die Messwellenlänge ist mit 2300 nm im Wesentlichen mittig zwischen einer ersten Referenzwellenlänge $\lambda_{R1}$ bei 2215 nm und einer zweiten Referenzwellenlänge $\lambda_{R2}$ bei 2385 nm ausgewählt. Gemäß der US 6 455 854 B1 wird der Einfluss von Nebel und Regen auf die Absorption an der Messwellenlänge dadurch kompensiert, dass der Einfluss an der ersten Referenzwellenlänge $\lambda_{R1}$ mit dem Einfluss an der zweiten Referenzwellenlänge $\lambda_{R2}$ gleichwirkend wie der Einfluss an der Messwellenlänge ist.

Die in der US 6 455 854 B1 gewählten Wellenlängen (2215 nm, 2300 nm, 2385 nm) sind gemäß der US 6 455 854 B1 geeignet für optische Messstrecken von Längen von einem bis zu tausend Metern. Bedingt durch diese Länge ist die Absorption des IR-Lichtes durch das Zielgas ausreichend groß, um einen messtechnischen Effekt zu erzielen.

Damit sind die in der US 6 455 854 B1 gewählten Wellenlängen (2215 nm, 2300 nm, 2385 nm) geeignet, große Areale mit einer offenen Messtrecke (Open-Path) messtechnisch zu überwachen. In einem Open-Path-Messsystem gemäß der US 6 455 854 B1 sind die Licht-abstrahlende Lichtquelle (Sender) und der Lichtempfangende Detektor (Empfänger) oder die Lichtempfangenden Detektoren (Empfänger) räumlich weit entfernt (1 m < 1 < 1000 m), einige Meter bis zu eintausend Meter, voneinander angeordnet.

Für wesentlich kürzere optische Messstrecken, wie sie von Messgeräten mit einer geschlossenen optischen Messstrecke (1 < 0,3 m), in denen die lichtabstrahlende Lichtquelle (Sender) und der lichtempfangende Detektor (Empfänger) oder die Lichtempfangenden Detektoren (Empfänger) nah beieinander gemeinsam in einer Messküvette als Punktdetektoren mit einer optischen Messstrecke kleiner als 0,3 Meter angeordnet sind, sind die in der US 6 455 854 B1 gewählten Wellenlängen (2215 nm, 2300 nm, 2385 nm) wenig geeignet, da bei diesen Wellenlängen die Absorption des IR-Lichtes durch das Zielgas auf der optischen Messtrecke (1 < 0,3 m) nicht ausreichend groß ist, um einen nennenswerten messbaren und verwertbaren Effekt zu erzielen, um beispielsweise eine Untere Explosionsgrenze (UEG) in geforderter Genauigkeit zu erfassen. Damit ergibt sich, dass für eine als Punkt-Detektor ausgebildete Messanordnung zur Messung von Alkanen mittels in einer Küvette, deren effektive optische Weglänge bedingt durch die Baugröße deutlich kleiner als 30 cm ausgebildet ist, diese Wellenlängen (2215 nm, 2300 nm, 2385 nm) ungeeignet sind.

Eine Vorrichtung mit einer Multireflexionsmessküvette, die eine Kompensation der Einflüsse von Feuchtigkeit und Kondensat erwähnt, ist in WO 2006/068781 A2 beschrieben. Der Referenzdetektor ist mit einem Bandpassfilter versehen, der eine einzelne Referenzwellenlänge selektiert.

In WO 2010/118748 A1 ist ein weiteres Open-Path-Messsystem beschrieben, das zur Kompensation von Umwelteinflüssen mit zwei Referenzwellenlängen, die unterhalb bzw. oberhalb der Messwellenlänge liegen, arbeitet. Das Messsystem wird für das Zielgas $CO_2$ beschrieben. In diesem Zusammenhang wird ein Messwellenlängenbereich 4,0 - 4,5 $\mu$m genannt, und Referenzwellenlängenbänder mit der Breite 0,5 $\mu$m unterhalb und oberhalb davon, d.h. 3,5 - 4,0 $\mu$m und 4,5 - 5,0 $\mu$m.

EP 0 930 496 A2 offenbart eine Vorrichtung zur optischen Erfassung eines Zielgases mit einer Messküvette, einer in die Messküvette einstrahlenden Strahlungsquelle, einem Mess- und einem Referenzdetektor zum Erfassen von Licht nach Passieren der Messküvette, wobei ein Bandpassfilter vor dem Messdetektor und ein Doppelbandpassfilter vor dem Referenzdetektor liegen. Eine Betriebs- und Auswerteeinrichtung verarbeitet die Signale der Detektoren, wobei Korrekturen des Messdetektorsignals erwähnt sind, die auf der Verhältnisbildung von Mess- und Referenzdetektorsignal beruhen.

Die US 6 469 303 B1 offenbart einen nicht dispersiven Infrarotgassensor.

Als ein besonderer Umwelteinfluss tritt während des Betriebes insbesondere in der Meeresumgebung die Kombination eines Feuchteeinflusses mit einem Salzeinfluss auf. Die Umgebungsluft enthält, z.B. auf einer Offshore-Bohrinsel oder auf Schiffen neben der Feuchtigkeit zusätzlich feinste Salzkristalle. Diese Salzkristalle gelangen in der Form eines Aerosols in die Messküvette und lagern sich als ein sehr feiner kristalliner Salzfilm innenwandig an der Messküvette, sowie an den optischen Komponenten, wie Linsen, Filtern und Spiegeln an.

Dieser Salzfilm wirkt hygroskopisch und bewirkt, dass nach einmaliger Kontamination mit salzhaltigem Aerosol fortwährend im jahrelangen Betrieb weitere Feuchtigkeit aus der Messumgebung in die Messküvette "hineingezogen" wird. Der Grad der relativen Feuchtigkeit selbst wird durch die Eigenerwärmung durch die Strahlungsquelle bestimmt und kann durch eine zusätzlich Beheizung des Detektors und/oder der Küvette auf Werte im Bereich von 80% reduziert werden, womit dann eine Kondensation mit Ausbildung von größeren Wassertropfen auf den optischen Komponenten und an den Innenwänden der Küvette vermieden werden kann. Dadurch ist sichergestellt, dass die Messanordnung nicht "optisch blind" wird. Unter "optisch blind" ist dabei im Sinne der vorliegenden Erfindung zu verstehen, dass ein Reflexion an den dafür vorgesehen optischen Elementen im Betrieb nicht mehr gegeben ist.

Bedingt durch die hygroskopischen Eigenschaften des kristallinen Salzfilmes wird Feuchtigkeit aus der Messumgebung in die Messküvette hineingezogen, was nach einmaliger Kontamination durch salzhaltige Umgebungsluft nahezu eine dauerhafte Betriebssituation mit Luftfeuchtigkeit in der Messküvette darstellt. Diese dauerhafte Betriebssituation legt die Messbedingungen für die Messeigenschaften der Messanordnung über längere Zeiträume von Monaten und Jahren hinweg als Messbedingung mit ständiger Anwesenheit von Luftfeuchtigkeit in der Messküvette fest, wobei durch Beheizung lediglich die Bildung von Kondensat und Wassertröpfchen an den Wandungen der Küvette und den optischen Komponenten, wie Linsen, Filtern und Spiegeln vermieden werden kann, nicht aber die ständige Anwesenheit von Luftfeuchtigkeit in variabler und nicht bekannter Konzentration. Diese Luftfeuchtigkeit hat Einfluss auf die Lichtabsorption an der Messwellenlänge und damit auf die Möglichkeiten der messtechnischen Erfassung der Zielgaskonzentration und deren messtechnischer Präzision und Wiederholbarkeit.

Weiterhin gibt es in vielen Anwendungsbereichen oft weitere Bestandteile in der Umgebungsluft, welche mit dem Wasserfilm auf den Oberflächen der Küvette, auf den Detektoren und den optischen Elementen anhaften können.

Als solche weitere Bestandteile der Umgebungsluft, insbesondere einer Umgebungsluft hoher Luftfeuchtigkeit, wie beispielsweise Nebel, sind Verbrennungsrückstände fossiler Brennstoffe wie Rauch und Rußpartikel zu nennen. Der Einfluss dieser Umwelteinflüsse, insbesondere des durch den kristallinen hygroskopischen Salzfilm bedingte fortwährende weitere Zufuhr von Luftfeuchtigkeit in die Küvette ist durch eine Beheizung allein, insbesondere für eine Messanordnung in einer explosionsgeschützten Ausführung in Einsatzszenarien wie Offshore- Bohrinseln oder auf Schiffen nicht zu kompensieren.

Selbst für eine Messanordnung in einer nicht-explosionsgeschützten Ausführung ist das durch den hygroskopischen Effekt des feinen kristallinen Salzfilms bedingte, fortwährende Eindringen von Luftfeuchtigkeit in der Küvette durch eine Änderung an der Beheizung von Detektor und/ oder Küvette, beispielsweise durch eine Verstärkung der Heizleistung oder eine Erhöhung der Heiztemperatur oder auch mit einer zyklisch vorgenommenen einer Ausheizung der gesamten Messanordnung, nicht vollständig zu kompensieren.

Durch eine Verwendung zusätzlicher Sensoren, wie Temperatur-, Feuchte- und Drucksensoren in der Küvette oder an den Detektoren können diese Umwelteinflüsse ebenfalls nicht vollständig kompensiert werden.

Es ist daher die Aufgabe der vorliegenden Erfindung, eine Messanordnung zu einer örtlich begrenzten infrarotoptischen Messung von einem Zielgas in Luftgasgemischen mit einer einfach durchführbaren Kompensation des Feuchteeinflusses zu Verfügung zu stellen.

Die Aufgabe wird gelöst mit einer Vorrichtung mit den Merkmalen des Patentanspruchs 1. Geeignete Ausführungsformen ergeben sich aus den Unteransprüchen.

Erfindungsgemäß sind in einer Vorrichtung zur optischen Erfassung eines Zielgases in Luftgasgemischen mit einer Kompensation des Einflusses der Luftfeuchtigkeit, folgende Komponenten vorhanden:

einer Betriebs- und Auswerteeinrichtung,

einer Messküvette, die als Multireflexionsmessküvette mit innenwandig optisch reflektierenden Oberflächen ausgeführt ist und einen Gaseinlass aufweist, der ausgebildet ist, mit einer Messumgebung Gase und Gasgemische auszutauschen,

eine Strahlungsquelle, die ausgebildet ist, Licht im infraroten Spektrum in die Messküvette zu emittieren, bevorzugt in einem infraroten Wellenlängenbereich von 2000 nm bis zu 5000 nm zu emittieren, weiter bevorzugt in einem Wellenlängenbereich von 3000 nm bis zu 4000 nm zu emittieren,

ein Messdetektor,

eine Referenzdetektoreinrichtung,

wobei der Messdetektor und die Referenzdetektoreinrichtung ausgebildet sind, dass Licht der Strahlungsquelle zu erfassen und in elektrische Signale umzuwandeln, die mit der Intensität des erfassten Lichtes korrespondieren,

wobei vor dem Messdetektor ein optisches Bandpass-Filterelement angeordnet ist, das als ein optisches Bandpasselement ausgebildet ist, um Licht einer Messwellenlänge im infraroten Bereich, bevorzugt in einem Wellenlängenbereich von 3200 nm bis 3500 nm, durchzulassen,

wobei die Betriebs- und Auswerteeinrichtung ausgebildet ist, die Strahlungsquelle zu betreiben und die elektrischen Signale der Messdetektors und der Referenzdetektoreinrichtung zu erfassen,

wobei ein vor der Referenzdetektoreinrichtung angeordnetes optisches Filterelement als optisches Doppelbandpasselement ausgebildet ist, um im infraroten Bereich Licht einer ersten Referenzwellenlänge und einer zweiten Referenzwellenlänge durchzulassen, bevorzugt mit einer ersten Referenzwellenlänge von 3000 nm bis 3200 nm und mit einer zweiten Referenzwellenlänge von 3800 nm bis 4000 nm durchzulassen, wobei die erste und die zweite Referenzwellenlänge und jeweils die zugehörige Bandbreite und der Maximalwert der Transmission für die erste und die zweite Referenzwellenlänge so gewählt sind, dass keine Signalverminderungen durch das Zielgas oder durch ein anderes Gas aus der Messumgebung gegeben ist, und die erste und die zweite Referenzwellenlänge w und jeweils die zugehörige Bandbreite und der Maximalwert der Transmission für die erste und die zweite Referenzwellenlänge eiterhin so gewählt sind, dass Umwelteinflüsse, nämlich der direkte Einfluss von Luftfeuchtigkeit und der durch den Salzgehalt bedingte indirekte Einfluss von Luftfeuchtigkeit, summarisch den gleichen Einfluss als Signalverminderung ergeben, der dem Einfluss als Signalverminderung an der Messwellenlänge gleich ist, und

wobei die Betriebs- und Auswerteeinrichtung dazu ausgebildet ist, die Strahlungsquelle zu betreiben und die elektrischen Signale des Messdetektors und der Referenzdetektoreinrichtung zu erfassen, die weiter ausgebildet ist, aus dem der ersten Referenzwellenlänge $\lambda_{R1}$ zugehörigen Signal, dem der zweiten Referenzwellenlänge $\lambda_{R2}$ zugehörigen Signal und dem der Messwellenlänge $\lambda_M$ zugehörigen Signal den Einfluss der Luftfeuchtigkeit, unter Einbeziehung der spektralen Emissionscharakteristik der Strahlungsquelle und unter Einbeziehung der spektralen Messempfindlichkeitskennlinie des Messdetektors und der spektralen Messempfindlichkeitskennlinie des mindestens einen Referenzdetektors, unter Einbeziehung der spektralen Transmissionseigenschaften des optischen Bandpass-Filterelementes und der spektralen Transmissionseigenschaften des mindestens einen optischen Doppelbandpass-Filterelementes, zu kompensieren und eine Zielgaskonzentration zu ermitteln.

Wenn im Folgenden davon die Rede ist, wie die erste und die zweite Referenzwellenlänge ausgewählt sind, ist damit auch gemeint, wie jeweils die zugehöriger Bandbreite und maximale Transmission der Filtereinrichtungen ausgewählt sind.

Die Messwellenlänge im Bereich von 3200 nm bis 3500 nm ist so gewählt, dass eine Absorption durch das Zielgas einer Kohlenwasserstoffverbindung, insbesondere Methan oder Propan, auf der effektiven optischen Weglänge in der Multireflexionsmessküvette gegeben ist.

Die erste Referenzwellenlänge im Bereich von Bereich von 3000 nm bis 3200 nm und die zweite Referenzwellenlänge im Bereich von 3800 nm bis 4000 nm sind so gewählt, dass keine Absorption durch das Zielgas einer Kohlenwasserstoffverbindung, insbesondere Methan oder Propan, oder durch ein anderes Gas der Messumgebung, auf der effektiven optischen Weglänge in der Multireflexionsmessküvette gegeben ist.

In optionaler und bevorzugter Weise sind Heizelemente in der Messanordnung angeordnet, welche ausgebildet sind, den Messdetektor und/oder den mindestens einen Referenzdetektor und/oder die Wandungen der Messküvette zu temperieren. Weiter bevorzugt sind die Heizelemente ausgebildet, den Messdetektor und/oder den mindestens einen Referenzdetektor und/oder die Wandungen der Messküvette in einem Temperaturbereich von 5°C bis 15°C oberhalb der Umgebungstemperatur zu temperieren. Weiter bevorzugt sind die Heizelemente rückseitig oder in der Nähe des Messdetektors und/oder bevorzugt rückseitig oder in der Nähe des mindestens einen Referenzdetektors, sowie rückseitig der Wandungen oder an den Wandungen der Messküvette angeordnet.

In einer optionalen Variante der Messanordnung sind die Strahlungsquelle, der Messdetektor und der mindestens eine Referenzdetektor an einer gleichen Seite, bevorzugt an einer der Stirnseiten der Messküvette, weiter bevorzugt im Wesentlichen nebeneinander, in der Messküvette angeordnet.

Weitere optionale Komponenten der Vorrichtung zur infrarot-optischen Messung von Zielgas in Luftgasgemischen sind eine Ansteuerungseinrichtung, welche ausgebildet ist, die Heizelemente zu betreiben, eine Energieversorgungseinrichtung, welche ausgebildet ist, die Strahlungsquelle, die Heizelemente, die Betriebs- und Auswerteeinrichtung und die Ansteuerungseinrichtung mit elektrischer Energie zu versorgen und bevorzugt weiter ausgebildet ist, über eine Einspeisungsschnittstelle von außen mit elektrischer Energie versorgt zu werden, sowie ein die Komponenten umschließendes äußeres Gehäuse, welches ausgebildet ist, die Elemente der Messanordnung, wie Messküvette mit Strahlungsquelle, Gaseinlass, Schutzelement, Messdetektor und den mindestens einen Referenzdetektor und/oder vorzugsweise die Betriebs- und Auswerteeinrichtung, sowie die weiteren Komponenten, wie die Ansteuerungseinrichtung und die Energieversorgungseinrichtung aufzunehmen.

In einer bevorzugten Weise sind das Messwellenlängenfilterelement und/oder die Referenzwellenlängenfiltereinrichtung als ein optisches Interferenzfilter ausgeführt.

In einer bevorzugten Weise sind das Messwellenlängenfilterelement und/oder die Referenzwellenlängenfiltereinrichtung als ein diffraktives optisches Element ausgeführt.

In einer bevorzugten Weise sind das Messwellenlängenfilterelement und/oder die Referenzwellenlängenfiltereinrichtung als ein optisches Interferenzfilter oder als ein diffraktives optisches Element ausgeführt.

In bevorzugter Weise ist zur Messumgebung hin am Gaseinlass ein Schutzelement angeordnet, welches ausgebildet, den Übertritt von Verunreinigungen aus der Messumgebung in die Messküvette hinein zu verhindern.

In weiter optionaler Weise ist in dem Gehäuse eine Anzeigeeinrichtung angeordnet, welche ausgebildet ist, Messwerte, Störungen und Alarmzustände darzustellen. Als ein Beispiel für einen typischen Alarmzustand ist dabei die Überschreitung einer Unteren Explosionsgrenze (UEG).

In weiter optionaler Weise ist in dem Gehäuse eine Kommunikationseinrichtung angeordnet, welche ausgebildet ist, Messwerte, Störungen und Alarmzustände über eine Datenschnittstelle an eine Zentrale zu übertragen.

In weiter optionaler Weise sind Alarmierungseinrichtungen in dem Gehäuse angeordnet, welche ausgebildet sind, Störungen und Alarmzustände optisch oder akustisch anzuzeigen.

In optionaler Weise ist die Messanordnung in einer explosionsgeschützten Ausführung als Messanordnung zur infrarot-optischen Messung ausgebildet, wobei das zur Messumgebung hin angeordnete Schutzelement ausgebildet ist, einen Energieübertrag oder einen Funkenübergang aus der Messküvette in die Messumgebung zu verhindern. In dieser optionalen explosionsgeschützte Ausführung der Messanordnung ist das Gehäuse derart ausgebildet, einen Energieübertrag oder einen Funkenübergang aus dem Gehäuse mit den darin enthaltenen Komponenten Messküvette, Strahlungsquelle, Gaseinlass, Schutzelement, Messdetektor und mindestens einem Referenzdetektor, Ansteuerungseinrichtung, Betriebs- und Auswerteeinrichtung und Energieversorgungseinrichtung in die Messumgebung zu verhindern.

In optionaler Weise sind an den Wandungen der Messküvette und/oder in der Nähe oder an dem Messdetektor und dem mindestens einen Referenzdetektor und/oder dem Heizelement mindestens ein Temperatursensor angeordnet, welcher ausgebildet ist, eine dem Messdetektor und dem mindestens einen Referenzdetektor repräsentierende Temperatur zu erfassen und als Signal an die Ansteuerungseinrichtung weiterzugeben, wobei die Ansteuerungseinrichtung ausgebildet und in der Lage ist, die Temperatursignale dazu zu verwenden, die Temperatur der Heizelemente und/oder der Wandungen der Messküvette und /oder des Messdetektors und des mindestens einen Referenzdetektors in einem vorgegebenen Temperaturbereich oder auf einen vorgegeben Temperaturwert zu stellen, zu halten, zu steuern oder zu regeln.

In weiter optionaler Weise ist ein optisches Element vor der Strahlungsquelle angeordnet, welches ausgebildet ist, das Licht der Strahlungsquelle zu fokussieren und spektral im Wellenlängenbereich auf einen bevorzugten Bereich im Bereich des infraroten Wellenlängenbereichs zu filtern.

Die Vorrichtung ist erfindungsgemäß bevorzugt als eine bauliche Einheit ausgeführt. Eine solche bauliche Einheit besteht dabei mindestens aus der Messküvette mit dem Messdetektor, dem mindestens einen Referenzdetektor, der Strahlungsquelle, den vor den Mess- und dem mindestens einen Referenzdetktor und bevorzugt vor der Strahlungsquelle angeordneten optischen Elementen und aus der Betriebs- und Auswerteeinrichtung.

Es ist aber auch im Rahmen der vorliegenden Erfindung mit umfasst, dass die Betriebs- und Auswerteeinrichtung vollständig oder mindestens teilweise baulich getrennt von der übrigen Elementen der Vorrichtung ausgeführt ist.

In einer vollständig baulich getrennten Ausführungsform ist die Betriebs- und Auswerteeinrichtung mit den zum Betrieb und zur Signalerfassung, Signalverarbeitung, Signalauswertung, wie auch den Mitteln zur Berechnung der Zielgaskonzentration aus dem ersten Referenzwellenlänge $\lambda_{R1}$ zugehörigen Signal, aus dem der zweiten Referenzwellenlänge $\lambda_{R2}$ zugehörigen Signal und aus dem der Messwellenlänge $\lambda_M$ zugehörigen Signal mit Kompensation des Einflusses der Luftfeuchtigkeit, sowie vorzugsweise eine Ausgabe und/oder Anzeige der Zielgaskonzentration, in einer separaten baulichen Einheit getrennt von den übrigen Elementen der Messanordnung angeordnet.

Eine mindestens teilweise baulich getrennte Ausführung kann den Betrieb der Strahlungsquelle, des Messdetektors und des mindestens einen Referenzdetektors, sowie mindestens eine erste Stufe der Signalerfassung und/oder Signalverarbeitung der Signale des Messdetektors und des mindestens einen Referenzdetektors, vorzugsweise mit Daten zu speziellen Eigenschaften und Beschaffenheiten der Strahlungsquelle, des Messdetektors und des mindestens eines Referenzdetektors, sowie weiter vorzugsweise Eigenschaften der vor dem Messdetektor und dem mindestens einen Referenzdetektor angeordneten optischen Filterelementen, in einer ersten baulichen Einheit enthalten, während weitere Stufen der Signalerfassung, Signalverarbeitung, Signalfilterung und Signalauswertung, wie auch die endgültige Berechnung der Zielgaskonzentration aus dem der ersten Referenzwellenlänge $\lambda_{R1}$ zugehörigen Signal, aus dem der zweiten Referenzwellenlänge $\lambda_{R2}$ zugehörigen Signal und aus dem der Messwellenlänge $\lambda_M$ zugehörigen Signal mit Kompensation des Einflusses der Luftfeuchtigkeit, sowie vorzugsweise eine Ausgabe und/oder Anzeige der Zielgaskonzentration, in einer zweiten baulichen Einheit ausgeführt sind.

Die Kompensation des Feuchteeinflusses erfolgt erfindungsgemäß mit Hilfe der Auswertung der Signale des Messdetektors und der Signale eines ersten Referenzdetektors in der Betriebs- und Auswerteeinrichtung.

Vor dem Messdetektor ist ein optisches Messwellenlängenfilterelement angeordnet, welches als ein erster Bandpass das Licht der Messwellenlänge $\lambda_M$ im Bereich von 3200 nm bis 3500 nm zum Messdetektor passieren lässt.

Die typische Bandbreite des Messwellenlängenfilterelementes liegt in einem Bereich von +/- 100 nm symmetrisch zur Lage der Messwellenlänge $\lambda_M$.

Ein Toleranzbereich der Transmission des Messwellenlängenfilterelementes, z.B. aufgrund vor Herstellungstoleranzen, ergibt sich mit +/- 50 nm zusätzlich zum Bereich, in welchem das optische Messwellenlängenfilterelement nominell per Spezifikation das Licht der Messwellenlänge $\lambda_M$ passieren lässt.

Die Messwellenlänge $\lambda_M$ ist spezifisch auf die spezifische Absorption in Form einer Signalverminderung des Messsignals am Messdetektor durch ein vorgegebenes Zielgas bei einer vorgegebenen Konzentration über eine effektive optische Weglänge in der Messküvette ausgewählt und abgestimmt.

Die effektive optische Weglänge ergibt sich in Form der Länge der Messküvette aus dem für die Messanordnung zur Verfügung stehenden Bauraum, sowie aus der konstruktiven Gestaltung der Messküvette und den Reflexionseigenschaften der Wandungen der Multireflexionsmessküvette.

In einer Anwendung mit Methan als Zielgas ergibt eine spezifisch abgestimmte Messwellenlänge $\lambda_M$ im Bereich

von 3200 nm bis 3500 nm in einer technischen Ausführung mit einer Multireflexionszelle eine beispielhafte absorptionsbedingte Signalverminderung von 10% bis 15% des Messsignals am Messdetektor durch das Zielgas Methan. In dieser Anwendung mit Methan als Zielgas ergibt sich beispielhaft eine effektive optische Weglänge in der Messküvette im Bereich von 12 cm bis 17 cm, bei einer inneren Baulänge der Messküvette von 5 cm. Weiterhin ist in dieser beispielhaften Anwendung mit Methan als Zielgas bei einer vorgegebenen Methan-Konzentration von 5 % im Volumen die spezifische Absorption von 10% bis 15% des Messsignals am Messdetektor gegeben. Eine Methan-Konzentration von 5 % im Volumen entspricht in etwa einem Wert von 100% der Unteren Explosionsgrenze (UEG).

In einer Anwendung mit Propan als Zielgas ergibt sich eine spezifisch abgestimmte Messwellenlänge $\lambda_M$ im Bereich von 3300 nm bis 3500 nm.

Vor dem Referenzdetektor ist eine optische Referenzwellenlängenfiltereinrichtung angeordnet, die als ein Doppelbandpassfilter ausgebildet ist und die beispielsweise Licht der ersten Referenzwellenlänge $\lambda_{R1}$ im Bereich von 3000 nm bis 3200 nm und das Licht der zweiten Referenzwellenlänge $\lambda_{R2}$ im Bereich von 3800 nm bis 4000 nm zum ersten Referenzdetektor passieren lässt.

Das Licht der ersten Referenzwellenlänge $\lambda_{R1}$ und das Licht der zweiten Referenzwellenlänge $\lambda_{R2}$ werden beide durch das Doppelbandpassfilter durchgelassen und gelangen als gemeinsame Referenz-Lichtmenge mit im Wesentlichen zwei spektralen Anteilen $\lambda_{R1} + \lambda_{R2}$ summarisch auf den Referenzdetektor. Vom ersten Referenzdetektor wird diese Referenz-Lichtmenge als ein Null-Signal erfasst.

Die typische Bandbreiten des Referenzwellenlängenfilterelementes liegen in einem Bereich von +/- 100 nm symmetrisch zur Lage der Referenzwellenwellenlängen $\lambda_{R1}$, $\lambda_{R2}$.

Der Toleranzbereich des Referenzwellenlängenfilterelementes, z.B. aufgrund vor Herstellungstoleranzen, ergibt sich mit +/-50 nm zusätzlich zum Bereich, in welchem das erste optische Referenzwellenlängenfilterelement nominell per Spezifikation das Licht der ersten Referenzwellenlänge $\lambda_{R1}$ und das Licht der zweiten Referenzwellenlänge $\lambda_{R2}$ passieren lässt.

Unter der Bandbreite der Wellenlängenfilterelemente wird im Sinne der vorliegenden Erfindung der Bereich der Filterelemente verstanden, bei welchem die Transmission des Lichts durch das Filterelement nicht weniger als 3 dB in Relation zur Transmission des Lichts an der Durchlasswellenlänge vermindert ist, wobei unter der Durchlasswellenlänge die Messwellenlänge $\lambda_M$ und die erste und die zweite Referenzwellenlänge $\lambda_{R1}$, $\lambda_{R2}$ zu verstehen sind.

In einer Variante der ersten Ausführungsform sind das Messwellenlängenfilterelement und/oder das erste Referenzwellenfilterelement als ein diffraktives optisches Element ausgeführt.

In einer weiteren Variante der ersten Ausführungsform sind das Messwellenlängenfilterelement und/oder das erste Referenzwellenfilterelement als ein optisches Interferenzfilter ausgeführt.

Umwelteinflüsse, wie Temperatur, Luftdruck, Salzgehalt und in der vorliegenden Erfindung Feuchtigkeit der Umgebungsluft, wirken sich sowohl an der Messwellenlänge $\lambda_M$, als auch an der ersten $\lambda_{R1}$ und der zweiten Referenzwellenlänge $\lambda_{R2}$ aus.

Die erste und zweite Referenzwellenlänge $\lambda_{R1}$, $\lambda_{R2}$ sind einerseits, wie zuvor beschrieben, so gewählt, dass keine Signalverminderungen durch das Zielgas oder durch ein anderes Gas aus der Messumgebung gegeben sind. Weiterhin sind die erste und zweite Referenzwellenlänge $\lambda_{R1}$, $\lambda_{R2}$ so gewählt, dass Umwelteinflüsse, nämlich der direkte Einfluss von Luftfeuchtigkeit und auch der durch den Salzgehalt bedingte indirekte Einfluss von Luftfeuchtigkeit, sich summarisch zu demselben Einfluss als Signalverminderung ergeben, der dem Einfluss als Signalverminderung an der Messwellenlänge $\lambda_M$ entspricht.

Dazu ist in einer ersten Variante dieser ersten Ausführungsform die erste Referenzwellenlänge $\lambda_{R1}$ so gewählt, dass der Einfluss der Luftfeuchtigkeit geringer ausgeprägt ist als bei der Messwellenlänge $\lambda_M$ und die zweite Referenzwellenlänge $\lambda_{R2}$ ist so gewählt, dass der Einfluss der Luftfeuchtigkeit stärker ausgeprägt ist, als bei der Messwellenlänge $\lambda_M$.

In einer zweiten Variante dieser ersten Ausführungsform ist die erste Referenzwellenlänge $\lambda_{R1}$ so gewählt, dass der Einfluss der Luftfeuchtigkeit stärker ausgeprägt ist als bei der Messwellenlänge $\lambda_M$ und die zweite Referenzwellenlänge $\lambda_{R2}$ ist so gewählt, dass der Einfluss der Luftfeuchtigkeit geringer ausgeprägt ist, als bei der Messwellenlänge $\lambda_M$.

In der ersten und der zweiten Variante dieser ersten Ausführungsform ergibt sich am ersten Referenzdetektor aus dem geringeren und stärkeren Einfluss des direkten und indirekten Einfluss der Luftfeuchtigkeit auf die Referenzwellenlängen $\lambda_{R1}$, $\lambda_{R2}$ gegenüber dem Einfluss an der Messwellenlänge $\lambda_M$ summarisch ein Einfluss in der Größenordnung, welcher dem Einfluss der Luftfeuchtigkeit bei der Messwellenlänge $\lambda_M$ im Wesentlichen entspricht. Mit diesem summarischen Einfluss steht auch unter Feuchteinfluss in der Betriebs- und Auswerteeinrichtung ein summarisches Null-Signal zur Verfügung, das für das Messsignal als eine Bezugsgröße zur Ermittlung der Gaskonzentration verwendet werden kann. Die Gaskonzentration des Zielgases wird in der Betriebs- und Auswerteeinrichtung durch Bezugnahme und in Relation des Messsignals zum Nullsignal ermittelt. Auf diese Weise ist der Feuchteeinfluss auf die ermittelte Gaskonzentration in der Betriebs- und Auswerteeinrichtung eliminiert, da er sowohl auf das mit der Messwellenlänge $\lambda_M$ korrespondierende Messsignal als auch auf das summarische Nullsignal, welches summarisch mit der ersten und zweiten Referenzwellenlänge korrespondiert, gleichsinnig wirkt.

Die Kompensation des Feuchteeinflusses erfolgt in einer zweiten Ausführungsform erfindungsgemäß mit Hilfe der Auswertung der Signale des Messdetektors und der Signale eines ersten Referenzdetektors und der Signale eines zweiten Referenzdetektors in der Betriebs- und Auswerteeinrichtung. Im Unterschied zur ersten Ausführungsform werden in der zweiten Ausführungsform zwei Referenzdetektoren mit jeweils einem zugehörigen Referenzwellenlängenfilterelement verwendet.

Die beiden Referenzdetektoren werden in der zweiten Ausführungsform als ein erster Referenzdetektor und als ein zweiter Referenzdetektor bezeichnet.

Die beiden zugehörigen Referenzwellenlängenfilterelemente werden in der zweiten Ausführungsform als ein erstes Referenzwellenlängenfilterelement und als ein zweites Referenzwellenlängenfilterelement bezeichnet.

Vor dem Messdetektor ist ein optisches Messwellenlängenfilterelement angeordnet, welches als ein erster Bandpass das Licht der Messwellenlänge $\lambda_M$ im Bereich von 3200 nm bis 3500 nm zum Messdetektor passieren lässt.

Die typische Bandbreite des Messwellenlängenfilterelementes liegt in einem Bereich von +/- 100 nm symmetrisch zur Lage der Messwellenlänge $\lambda_M$.

Ein Toleranzbereich des Messwellenlängenfilterelementes, z.B. aufgrund vor Herstellungstoleranzen, ergibt sich mit +/- 50 nm zusätzlich zum Bereich, in welchem das optische Messwellenlängenfilterelement nominell per Spezifikation das Licht der der Messwellenlänge $\lambda_M$ passieren lässt.

Die Messwellenlänge $\lambda_M$ ist, wie in der ersten Ausführungsform, spezifisch auf die spezifische Absorption einer Signalverminderung des Messsignals am Messdetektor durch ein vorgegebenes Zielgas bei einer vorgegebenen Konzentration über eine effektive optische Weglänge in der Messküvette ausgewählt und abgestimmt.

Die effektive optische Weglänge ergibt sich in Form der Länge der Messküvette aus dem für die Messanordnung zur Verfügung stehenden Bauraum, sowie aus der konstruktiven Gestaltung der Messküvette und den Reflexionseigenschaften der Wandungen der Multireflexionsmessküvette.

In einer Anwendung mit Methan als Zielgas ergibt eine spezifisch abgestimmte Messwellenlänge $\lambda_M$ im Bereich von 3200 nm bis 3500 nm in einer technischen Ausführung mit einer Multireflexionszelle eine beispielhafte absorptionsbedingte Signalverminderung von 10% bis 15% des Messsignals am Messdetektor durch das Zielgas Methan. In dieser Anwendung mit Methan als Zielgas ergibt sich beispielhaft eine effektive optische Weglänge in der Messküvette im Bereich von 12 cm bis 17 cm, bei einer inneren Baulänge der Messküvette von 5 cm. Weiterhin ist in dieser beispielhaften Anwendung mit Methan als Zielgas bei einer vorgegebenen Methan-Konzentration von 5 % im Volumen die spezifische Absorption von 10% bis 15% des Messsignals am Messdetektor gegeben. Eine Methan-Konzentration von 5 % im Volumen entspricht in etwa einem Wert von 100% der Unteren Explosionsgrenze (UEG).

In einer Anwendung mit Propan als Zielgas ergibt sich eine spezifisch abgestimmte Messwellenlänge $\lambda_M$ im Bereich von 3300 nm bis 3500 nm.

Vor dem ersten Referenzdetektor ist ein erstes optisches Referenzwellenlängenfilterelement angeordnet, welches als ein Bandpassfilter das Licht der ersten Referenzwellenlänge $\lambda_{R1}$ im Bereich von 3000 nm bis 3200 nm zum ersten Referenzdetektor passieren lässt.

Vor dem zweiten Referenzdetektor ist ein zweites optisches Referenzwellenlängenfilterelement angeordnet, welches als ein Bandpassfilter das Licht der zweiten Referenzwellenlänge $\lambda_{R2}$ im Bereich von 3800 nm bis 4000 nm zum zweiten Referenzdetektor passieren lässt.

Das Licht der ersten Referenzwellenlänge $\lambda_{R1}$ wird durch das erste optische Referenzwellenlängenfilterelement durchgelassen und gelangt als ein erster Anteil einer Referenz-Lichtmenge mit im Wesentlichen spektralen Anteil $\lambda_{R1}$ auf den ersten Referenzdetektor.

Das Licht der zweiten Referenzwellenlänge $\lambda_{R2}$ wird durch das zweite optische Referenzwellenlängenfilterelement durchgelassen und gelangt als ein zweiter Anteil der Referenz-Lichtmenge mit im Wesentlichen spektralen Anteil $\lambda_{R2}$ auf den zweiten Referenzdetektor.

Der erste und der zweite Anteil der Referenz- Lichtmenge wird nach der Erfassung durch den ersten und zweiten Referenzdetektor in der Betriebs- und Auswerteeinrichtung in ein Null-Signal zusammengeführt.

Die typische Bandbreite des ersten Referenzwellenlängenfilterelementes liegt in einem Bereich von +/- 100 nm symmetrisch zur Lage der ersten Referenzwellenwellenlänge $A_{R1}$.

Die typische Bandbreite des zweiten Referenzwellenlängenfilterelementes liegt in einem Bereich von +/- 100 nm symmetrisch zur Lage der zweiten Referenzwellenwellenlänge $\lambda_{R2}$.

Ein Toleranzbereich der Transmission des ersten und zweiten Referenzwellenlängenfilterelementes, z.B. aufgrund vor Herstellungstoleranzen, ergibt sich mit +/- 50 nm zusätzlich zum Bereich, in welchem das erste optische Referenzwellenlängenfilterelement nominell per Spezifikation das Licht der ersten Referenzwellenlänge $\lambda_{R1}$ und das zweite und das Referenzwellenlängenfilterelement nominell per Spezifikation das Licht der zweiten Referenzwellenlänge $\lambda_{R2}$ passieren lassen.

In einer Variante der zweiten Ausführungsform sind das Messwellenlängenfilterelement und/oder das erste Referenzwellenfilterelement und oder das zweite Referenzwellenfilterelement als ein diffraktives optisches Element ausgeführt.

In einer weiteren Variante der zweiten Ausführungsform sind das Messwellenlängenfilterelement und/oder das erste Referenzwellenfilterelement und oder das zweite Referenzwellenfilterelement als ein optisches Interferenzfilter ausgeführt.

Umwelteinflüsse, wie Temperatur, Luftdruck, Salzgehalt und in der vorliegenden Erfindung Feuchtigkeit der Umgebungsluft, wirken sich sowohl an der Messwellenlänge $\lambda_M$, als auch an der ersten $\lambda_{R1}$ und der zweiten Referenzwellenlänge $\lambda_{R2}$ aus.

Die erste und zweite Referenzwellenlänge $\lambda_{R1}$, $\lambda_{R2}$ sind einerseits, wie zuvor beschrieben, so gewählt, dass keine Signalverminderungen durch das Zielgas, oder durch andere Gase der Messumgebung, gegeben sind. Weiterhin sind die erste und zweite Referenzwellenlänge $\lambda_{R1}$, $\lambda_{R2}$ (jeweils mit zugehöriger Bandbreite und maximaler Transmission) so gewählt, dass Umwelteinflüsse, nämlich der direkte Einfluss von Luftfeuchtigkeit und auch der durch den Salzgehalt bedingte indirekte Einfluss von Luftfeuchtigkeit, sich in Kombination in dem in der Betriebs- und Auswerteeinrichtung ermittelten Nullsignal zu demselben Einfluss als Signalverminderung ergeben, der dem Einfluss als Signalverminderung an der Messwellenlänge $\lambda_M$ entspricht.

Dazu ist in einer ersten Variante dieser zweiten Ausführungsform die erste Referenzwellenlänge $\lambda_{R1}$ so gewählt, dass der direkte und indirekte Einfluss der Luftfeuchtigkeit geringer ausgeprägt ist als bei der Messwellenlänge $\lambda_M$ und die zweite Referenzwellenlänge $\lambda_{R2}$ ist so gewählt, dass der direkte und indirekte Einfluss der Luftfeuchtigkeit stärker ausgeprägt ist, als bei der Messwellenlänge $\lambda_M$.

In einer zweiten Variante dieser zweiten Ausführungsform ist die erste Referenzwellenlänge $\lambda_{R1}$ so gewählt, dass der direkte und indirekte Einfluss der Luftfeuchtigkeit stärker ausgeprägt ist als bei der Messwellenlänge $\lambda_M$ und die zweite Referenzwellenlänge $\lambda_{R2}$ ist so gewählt, dass der direkte und indirekte Einfluss der Luftfeuchtigkeit geringer ausgeprägt ist, als bei der Messwellenlänge $\lambda_M$. In beiden Varianten dieser zweiten Ausführungsform ergibt sich jeweils aus dem geringeren und stärkeren Einfluss des direkten und indirekten Einflusses der Luftfeuchtigkeit auf das mit der ersten Referenzwellenlänge $\lambda_{R1}$ korrespondierenden Signal am ersten Referenzdetektor und auf das mit der zweiten Referenzwellenlänge $\lambda_{R2}$ korrespondierenden Signal am zweiten Referenzdetektor in der Betriebs- und Auswerteeinrichtung ein Einfluss, welcher dem Einfluss der Luftfeuchtigkeit bei der Messwellenlänge $\lambda_M$ am Messdetektor entspricht. Somit steht auch in dieser zweiten Ausführungsform unter Feuchteinfluss in der Betriebs- und Auswerteeinrichtung ein Null-Signal zur Verfügung, das für das Messsignal als eine Bezugsgröße zur Ermittlung der Gaskonzentration geeignet ist.

Die Gaskonzentration des Zielgases wird in der Betriebs- und Auswerteeinrichtung, wie auch in der ersten Ausführungsform, durch Bezugnahme und in Relation des Messsignals am Messdetektor zum Nullsignal ermittelt.

Auf diese Weise ist der Feuchteeinfluss auf die ermittelte Gaskonzentration in der Betriebs- und Auswerteeinrichtung eliminiert, da er sowohl auf das mit der Messwellenlänge $\lambda_M$ korrespondierende Messsignal und auf das Nullsignal wirkt, welches auf Basis der Signale der ersten und zweiten Referenzwellenlänge am ersten und zweiten Referenzdetektor ermittelt wurde, gleichsinnig wirkt.

In einer bevorzugten Variante der ersten und zweiten Ausführungsform sind die erste und die zweite Referenzwellenlänge $\lambda_{R1}$ und $\lambda_{R2}$ in Relation zur Messwellenlänge $\lambda_M$ so gewählt, dass die spektrale Emissionscharakteristik der Strahlungsquelle berücksichtigt wird.

Diese Berücksichtigung wird dadurch erreicht, dass die erste Referenzwellenlänge $\lambda_{R1}$ so gewählt wird, dass die durch den Feuchteeinfluss bedingte Absorption an der ersten Referenzwellenlänge $\lambda_{R1}$ und die durch die spektrale Emissionscharakteristik der Strahlungsquelle bedingte spektrale Lichtintensität an der ersten Referenzwellenlänge $\lambda_{R1}$ summarisch einen ersten Anteil des Nullsignals ergeben, welcher summarisch mit dem zweiten Anteil des Nullsignals, welcher sich summarisch aus der durch den Feuchteeinfluss bedingten Absorption an der zweiten Referenzwellenlänge $\lambda_{R2}$ und dem durch die spektrale Emissionscharakteristik der Strahlungsquelle bedingten spektrale Lichtintensität an der zweiten Referenzwellenlänge $\lambda_{R2}$ ergibt, das Nullsignal ergibt, das dem Einfluss der durch den Feuchteeinfluss bedingten Absorption an der Messwellenlänge $\lambda_M$ und der durch die spektrale Emissionscharakteristik der Strahlungsquelle bedingte spektrale Lichtintensität an der Messwellenlänge $\lambda_M$ entspricht.

Erfindungsgemäß sind die erste und die zweite Referenzwellenlänge $\lambda_{R1}$ und $\lambda_{R2}$ so gewählt, dass die Transmissionseigenschaften des mindestens einen Referenzwellenlängenfilterelemente und des Messwellenlängenfilterelementes mit berücksichtigt werden.

Diese Berücksichtigung wird dadurch erreicht, dass die erste Referenzwellenlänge $\lambda_{R1}$ so gewählt wird, dass sich der erste Anteil des Nullsignals summarisch aus der durch den Feuchteeinfluss bedingten Absorption an der ersten Referenzwellenlänge $\lambda_{R1}$ und den Transmissionseigenschaften des mindestens einen Referenzwellenlängenfilterelementes an der ersten Referenzwellenlänge $\lambda_{R1}$ ergibt und sich der zweite Anteil des Nullsignals summarisch aus der durch den Feuchteeinfluss bedingten Absorption an der zweiten Referenzwellenlänge $\lambda_{R2}$ und den Transmissionseigenschaften des mindestens einen Referenzwellenlängenfilterelementes an der zweiten Referenzwellenlänge $\lambda_{R2}$ ergibt, so dass das Nullsignal dem Einfluss der durch den Feuchteeinfluss bedingten Absorption an der Messwellenlänge $\lambda_M$ und den Transmissionseigenschaften des Messwellenlängenfilterelementes an der Messwellenlänge $\lambda_M$ entspricht.

Erfindungsgemäß sind bei der ersten und zweiten Ausführungsform die erste und die zweite Referenzwellenlänge $\lambda_{R1}$ und $\lambda_{R2}$ in Relation zur Messwellenlänge $\lambda_M$ so gewählt, dass die spektrale Emissionscharakteristik der Strahlungsquelle und die Transmissionseigenschaften der Messwellenlängenfilterelementes und des mindestens einen Referenzwellenlängenfilterelementes berücksichtigt werden.

Diese Berücksichtigung wird dadurch erreicht, dass die erste Referenzwellenlänge $\lambda_{R1}$ so gewählt wird, dass sich der erste Anteil des Nullsignals summarisch aus der durch den Feuchteeinfluss bedingten Absorption an der ersten Referenzwellenlänge $\lambda_{R1}$ und den Transmissionseigenschaften des mindestens einen Referenzwellenlängenfilterelementes und der die durch die spektrale Emissionscharakteristik der Strahlungsquelle bedingten spektralen Lichtintensität an der ersten Referenzwellenlänge $\lambda_{R1}$ ergibt und sich der zweite Anteil des Nullsignals summarisch aus der durch den Feuchteeinfluss bedingten Absorption an der zweiten Referenzwellenlänge $\lambda_{R2}$ und den Transmissionseigenschaften des mindestens einen Referenzwellenlängenfilterelementes und der die durch die spektrale Emissionscharakteristik der Strahlungsquelle bedingten spektralen Lichtintensität an der zweiten Referenzwellenlänge $\lambda_{R2}$ ergibt, so dass das Nullsignal dem Einfluss der durch den Feuchteeinfluss bedingten Absorption an der Messwellenlänge $\lambda_M$ und den Transmissionseigenschaften des Messwellenlängenfilterelementes und der die durch die spektrale Emissionscharakteristik der Strahlungsquelle bedingten spektralen Lichtintensität an der Messwellenlänge $\lambda_M$ entspricht.

Erfindungsgemäß wird nicht nur die Lage der ersten und zweiten Referenzwellenlänge in Relation zur Messwellenlänge $\lambda_M$ im spektralen Bereich in Abhängigkeit von der Emissionscharakteristik der Strahlungsquelle, den Transmissionseigenschaften des mindestens einen Referenzwellenlängenfilterelementes und des Messwellenlängenreferenzelements, und der durch den Feuchteeinfluss bedingten Absorption an der ersten und zweiten Referenzwellenlänge ausgewählt, sondern die Transmissionseigenschaften des mindestens einen Referenzwellenlängenfilterelementes werden zudem an die Emissionscharakteristik der Strahlungsquelle und an die Messempfindlichkeit des mindestens einen Referenzdetektors an der ersten und zweiten Referenzwellenlänge angepasst.

Dazu wird die Bandbreite des mindestens einen Referenzwellenlängenfilterelementes für die erste und die zweite Referenzwellenlänge unterschiedlich und verschieden voneinander so gewählt, so dass der Verlauf der spektralen Intensität der Strahlungsquelle und/oder die verschiedene Messempfindlichkeiten des mindestens einen Referenzdetektors an der ersten und an der zweiten Referenzwellenlänge mit berücksichtigt und mit ausgeglichen werden.

Die erste und zweite Ausführungsformen ermöglichen eine Auswahl der Referenzwellenlängen $\lambda_{R1}$, $\lambda_{R2}$ auf der spektralen Skala oberhalb und unterhalb der Messwellenlänge $\lambda_M$, wobei nicht allein Umgebungseinflüsse, nämlich der Feuchteeinfluss die genaue Lage der Referenzwellenlängen $\lambda_{R1}$, $\lambda_{R2}$ auf der spektralen Skala in Relation zur Messwellenlänge $\lambda_M$ bestimmt, sondern die weiteren Komponenten der Messanordnung die exakte Auswahl der Referenzwellenlängen $\lambda_{R1}$, $\lambda_{R2}$ auf der spektralen Skala mit bestimmen.

In einem vereinfachten ersten Ansatz zur Bestimmung der Referenzwellenlängen $\lambda_{R1}$, $\lambda_{R2}$ nach der ersten Ausführungsform mit einem Doppelbandpass als Referenzwellenlängenfilterelement, bei dem die Transmissionseigenschaften des Messwellenlängenfilterelementes und des Referenzwellenlängenfilterelementes, sowie die spektrale Emissionscharakteristik der Strahlungsquelle nicht berücksichtigt sind und unter der Annahme, dass die durch den Feuchteeinfluss bedingte Licht- Absorption über der optischen Messstrecke im spektralen Bereich unterhalb der Messwellenlänge $\lambda_M$ in den Bereich oberhalb der Messwellenlänge $\lambda_M$ im Wesentlichen durch eine linear abfallende Funktion beschreibbaren Verlauf genügt, ergibt sich ein im Wesentlichen symmetrischer Abstand der beiden Referenzwellenlängen $\lambda_{R1}$, $A_{R2}$ von der Messwellenlänge $\lambda_M$. So ergeben sich beispielhaft nach dem vereinfachten Ansatz bei einer Messwellenlänge $\lambda_M$ von 3300 nm eine erste Referenzwellenlänge $\lambda_{R1}$ mit 3100 nm und eine zweite Referenzwellenlänge $\lambda_{R2}$ von 3900 nm.

Unter Berücksichtigung eines variablen Verlaufs der spektralen Intensität der Strahlungsquelle im Wellenlängenbereich der ersten und zweiten Referenzwellenlänge $\lambda_{R1}$, $\lambda_{R2}$ und der Messwellenlänge $\lambda_M$, unter Berücksichtigung einer durch die Abweichung vom linearen Verlauf durch den Feuchteeinfluss bedingte LichtAbsorption über der optischen Messstrecke im spektralen Bereich oberhalb und unterhalb der Messwellenlänge $\lambda_M$ und unter Berücksichtigung der spektralen Emissionscharakteristik der Strahlungsquelle und der Transmissionseigenschaften des Messwellenlängenfilterelementes und der Transmissionseigenschaften des Referenzwellenlängenfilterelementes ergibt sich in einem zweiten Ansatz nach der ersten Ausführungsform mit einem als Doppelbandpass ausgeführten Referenzwellenlängenfilterelement bei einer Messwellenlänge $\lambda_M$ von 3300 nm eine Auslegung mit einer ersten Referenzwellenlänge $\lambda_{R1}$ mit 3100 nm und mit einer zweiten Referenzwellenlänge $\lambda_{R2}$ von 3900 nm.

Mit Hilfe der folgenden Formeln wird die Bildung des Nullsignals und die darauf basierende Feuchtekompensation in einer vereinfachten Form näher erläutert. Dabei ist im Sinne einer vereinfachten Darstellung die Absorption in der Art eines Absorptions-Signals beschrieben, wobei dieses sowohl als eine physikalische, wie auch als eine elektrische Größe zu verstehen ist.

Formelzeichen:

$\lambda_M$ :    Messwellenlänge

| | | |
|---|---|---|
| $\lambda_{R1}$ : | erste Referenzwellenlänge $\lambda_{R1}$ | |
| $\lambda_M$ : | zweite Referenzwellenlänge $\lambda_{R2}$ | |
| $A(\lambda)$ : | Absorptionssignal in Abhängigkeit einer Wellenlänge $\lambda$ | |
| Z: | Zielgas | |
| K(Z) : | Zielgaskonzentration | |
| H: | relative Luftfeuchtigkeit im Gasraum der Messküvette | |
| $T(\lambda)$ : | Transmissionseigenschaften des Wellenlängenfilterelementes an der Wellenlänge $\lambda$ | |
| $SR(\lambda)$ : | Emissionseigenschaften der Strahlungsquelle an der Wellenlänge $\lambda$ | |
| $A(\lambda_{R1},\lambda_{R1})$ : | Summarisches Referenz- Absorptionssignal an der ersten Referenzwellenlänge $\lambda_{R1}$ und an der zweiten Referenzwellenlänge $\lambda_{R2}$ | |
| $A(H,\lambda_{R1})$ : | Absorptionssignal, bedingt durch die Luftfeuchtigkeit, an der ersten Referenzwellenlänge $\lambda_{R1}$ | |
| $A(H,A_{R2})$ : | Absorptionssignal, bedingt durch die Luftfeuchtigkeit an der zweiten Referenzwellenlänge $\lambda_{R2}$ | |
| $A(H,\lambda_M)$ : | Absorptionssignal, bedingt durch die Luftfeuchtigkeit an der Messwellenlänge $\lambda_M$ | |
| $A(Z,\lambda_{R1})$ : | Absorptionssignal, bedingt durch das Zielgas, an der ersten Referenzwellenlänge $\lambda_{R1}$ | |
| $A(Z,\lambda_{R2})$ : | Absorptionssignal, bedingt durch das Zielgas an der zweiten Referenzwellenlänge $\lambda_{R2}$ | |
| $A(Z,\lambda_M)$ : | Absorptionssignal, bedingt durch das Zielgas an der Messwellenlänge $\lambda_M$ | |
| $A(0,\lambda_M)$ : | Nullsignal, ohne Absorption durch das Zielgas und ohne Feuchteeinfluss an der Messwellenlänge $\lambda_M$ | |
| $A(0,H,\lambda_M)$ : | Nullsignal, ohne Absorption durch das Zielgas und mit Feuchteeinfluss an der Messwellenlänge $\lambda_M$ | |
| $A(Z,H,\lambda_{R1},A_{R2})$ : | Summarisches Absorptionssignal an der ersten Referenzwellenlänge $\lambda_{R1}$ und an der zweiten Referenzwellenlänge $\lambda_{R2}$ bedingt durch die Luftfeuchtigkeit und durch das Zielgas | |
| $A(Z,H,\lambda_M)$ : | Summarisches Absorptionssignal an Messwellenlänge $\lambda_M$ bedingt durch die Luftfeuchtigkeit und durch das Zielgas | |
| $A(Z,H,T,S,\lambda_{R10},\lambda_{R20})$ : | Summarisches Absorptionssignal an den angepassten Referenzwellenlängen $\lambda_{R10}$ und $\lambda_{R20}$ bedingt durch die Luftfeuchtigkeit und bedingt durch das Zielgas unter Einbeziehung der Transmissionseigenschaften des mindestens einen Referenzwellenlängenfilterelementes an den angepassten Referenzwellenlängen $\lambda_{R10}$ , $\lambda_{R20}$ und der Emissionseigenschaften der Strahlungsquelle an den angepassten Referenzwellenlängen $\lambda_{R10}, \lambda_{R20}$ | |
| $A(Z,H,T,S,\lambda_M)$ : | Summarisches Absorptionssignal an Messwellenlänge $\lambda_M$ bedingt durch die Luftfeuchtigkeit und bedingt durch das Zielgas unter Einbeziehung der Transmissionseigenschaften des Messwellenlängenfilterelementes an der Messwellenlänge $\lambda_M$ und der Emissionseigenschaften der Strahlungsquelle an der Messwellenlänge $\lambda_M$. | |

Die folgenden Erläuterungen und Herleitungen beschreiben die Kompensation des Feuchteeinflusses anhand der vereinfachten Gleichungen.

Die Referenzwellenlängen sind so gewählt, dass keine Absorption durch das Zielgas an der ersten und zweiten Referenzwellenlänge $\lambda_{R1}$, $\lambda_{R2}$ gegeben ist. Dies beschreiben Formel [1] und Formel [2].

$$A(Z,\ \lambda_{R1})\ =\ 0 \qquad\qquad [1]$$

$$A(Z,\ \lambda_{R2})\ =\ 0 \qquad\qquad [2]$$

Es findet eine Absorption mit einem Effekt einer Signalverminderung von k1 durch das Zielgas ohne Feuchteeinfluss an der Messwellenlänge $\lambda_M$ statt.

Die Messwellenlänge $\lambda_M$ und die effektive optische Weglänge sind so aufeinander abgestimmt und gewählt, dass sich dabei für das Zielgas Methan eine Signalverminderung um k1= 0,85 gegenüber dem Nullsignal $A(0, \lambda_M)$ ergibt. Dies beschreibt Formel [3] .

$$A(Z,\ \lambda_M)\ =\ k1\ *\ A(0,\ \lambda_M) \qquad\qquad [3]$$

Es findet eine zusätzliche Signalverminderung von k2 gegenüber dem Nullsignal $A(0, \lambda_M)$ und gegenüber dem Messsignal $A(Z, \lambda_M)$ bei Anwesenheit des Zielgases durch den Feuchteeinfluss an der Messwellenlänge $\lambda_M$ statt. Dies beschreibt Formel [4].

$$A(Z, H, \lambda_M) = k2 * k1* A(0, \lambda_M) \qquad [4]$$

Die Absorption an den Referenzwellenlängen $\lambda_{R1}$, $\lambda_{R2}$ durch Feuchtigkeit ergibt sich summarisch als Referenz-Absorptionssignal aus der durch die Luftfeuchtigkeit und durch das Zielgas bedingten Absorption. Dies beschreibt Formel [5].

$$A(Z,H, \lambda_{R1}, \lambda_{R2}) = A(Z, \lambda_{R1}) + A(Z, \lambda_{R2}) +$$
$$A(H, \lambda_{R1}) + A(H, \lambda_{R2}) \qquad [5]$$

Unter Berücksichtigung von [1] und [2] vereinfacht sich Formel [5] zu Formel [6].

$$A(H, \lambda_{R1}, \lambda_{R2}) = A(H, \lambda_{R1}) + A(H, \lambda_{R2}) \qquad [6]$$

Mit Einbeziehung der Signalverminderung k2 ergibt sich daraus Formel [7] als summarisches Referenz- Absorptionssignal in Bezug zur Absorption an den Referenzwellenlängen ohne Feuchteeinfluss.

$$A(H, \lambda_{R1}, \lambda_{R2}) = A(H, \lambda_{R1}) + A(H, \lambda_{R2}) =$$
$$k2* (A(\lambda_{R1}) + A(\lambda_{R2})) \qquad [7]$$

Bezieht man das Messsignal $A(Z,H,\lambda_M)$ [4] auf das summarische Referenzsignal $A(H, \lambda_{R1}, A_{R2})$ [6], [7] als Quotient [8], so erhält man ein Konzentrationssignal in Abhängigkeit vom Zielgas mit Kompensation des Feuchteeinflusses.

$$K(Z,H) = (k2 * k1* A(0, \lambda_M)) /$$
$$(k2* (A(\lambda_{R1}) + A(\lambda_{R2}))) \qquad [8]$$

$$K(Z,H) = (k1* A(0, \lambda_M)) / (A(\lambda_{R1}) + A(\lambda_{R2})) \qquad [9]$$

Daraus ist ersichtlich, dass der Feuchteeinfluss k2 in der Formel [9] eliminiert werden kann und damit sich die Zielgaskonzentration aus der Signalverminderung k1 gegenüber dem Nullsignal $A(0, \lambda_M)$ an der Messwellenlänge $\lambda_M$ und dem summarischen Referenzsignal $A(\lambda_{R1}, \lambda_{R1})$ an den Referenzwellenlängen $\lambda_{R1}$, $\lambda_{R2}$ ergibt.

Mit Berücksichtigung der Emissionseigenschaften der Strahlungsquelle und der Transmissionseigenschaften der Filterelemente ergeben sich eine erweiterte Formel [10] für die Messwellenlänge und eine erweiterte Formel [11] für an diese Emissionseigenschaften der Strahlungsquelle und der Transmissionseigenschaften der Referenzwellenlängenfilterelemente angepasste Referenzwellenlängen $\lambda_{R10}$, $\lambda_{R20}$. Die Emissionseigenschaften $S(\lambda_M)$ der Strahlungsquelle an der Messwellenlänge $\lambda_M$ und die Transmissionseigenschaften des Messwellenlängenfilterelementes an der Messwellenlänge $\lambda_M$ werden in einen angepassten Verminderungsfaktor k10 einbezogen.

Die Emissionseigenschaften $S(\lambda_{R10}, \lambda_{R20})$ und Transmissionseigenschaften $T(\lambda_{R10}, \lambda_{R20})$ der Referenzwellenlängenfilterelemente werden zusätzlich zum Feuchteeinfluss H in einen angepassten Faktor k20 einbezogen. In den Transmissionseigenschaften der Messwellenlängenfilterelemente und der Referenzwellenlängenfilterelemente sind neben der Transmission an der Wellenlänge auch die jeweiligen Bandbreiten mit enthalten, nämlich

$$A(Z, H,T,S, \lambda_M) = k20 * k10* A(0, \lambda_M) \qquad [9]$$

$$A(H,T,S, \lambda_{R10}, \lambda_{R20}) = A(H,T,S,\lambda_{R10}) +$$
$$A(H,T,S, \lambda_{R20}) ) = k20* (A(\lambda_{R10}) + A(\lambda_{R20})), \qquad [10]$$

sodass sich in der Quotientenbildung [11] ein Konzentrationssignal in Abhängigkeit vom Zielgas mit Kompensation des Feuchteeinflusses unter Berücksichtigung der Emissionseigenschaften der Strahlungsquelle und der Transmissionseigenschaften der Referenzwellenlängenfilterelemente mit daran angepassten Referenzwellenlängen $\lambda_{R10}$, $\lambda_{R20}$ ergibt.

$$K(Z,H,T,S) = (k20 * k10* A(0, \lambda_M)) /$$
$$(k2* (A(\lambda_{R10}) + A(\lambda_{R20})) \qquad\qquad [11]$$

$$K(Z,H,T,S) = (k10* A(0, \lambda_M)) / (A(\lambda_{R1}) + A(\lambda_{R2})) \qquad [12]$$

Damit ergibt sich die Zielgaskonzentration aus der Signalverminderung k10 gegenüber dem Nullsignal A(0, $\lambda_M$) an der Messwellenlänge $\lambda_M$ und dem summarischen Referenzsignal A($\lambda_{R10}$, $\lambda_{R10}$) an den angepassten Referenzwellenlängen $\lambda_{R10}$, $\lambda_{R20}$.

Die vorliegende Erfindung wird in ihren bevorzugten Ausführungsformen anhand der nachfolgenden Figuren näher erläutert. Es zeigen

die Figur 1a      eine erste Ausführungsform einer Messanordnung zur infrarot-optischen Messung von Gasen und Gasgemischen mit Kompensation von Umgebungseinflüssen,

die Figur 1b      eine Detailansicht der ersten Ausführungsform der Messanordnung nach Figur 1a,

die Figur 2a      eine zweite Ausführungsform einer Messanordnung zur infrarot-optischen Messung von Gasen und Gasgemischen mit Kompensation von Umgebungseinflüssen,

die Figur 2b      eine Detailansicht der zweiten Ausführungsform der Messanordnung nach Figur 2a,

die Figur 3      eine spektrale Darstellung der verwendeten Wellenlängen der Messanordnung nach den Figuren 1a, 1b, 2a, 2b.

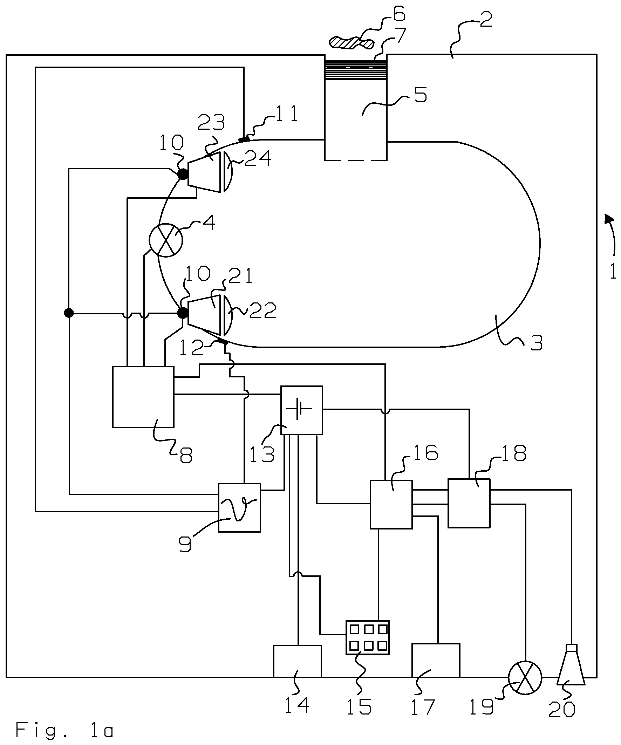

In der Figur 1a ist eine erste Messanordnung 1 zur infrarot-optischen Messung von Gasen und Gasgemischen mit Kompensation von Umgebungseinflüssen mit einem Gehäuse 2 mit einer Messküvette 3, eine Betriebs- und Auswerteeinrichtung 8, eine Ansteuereinrichtung 9, eine Energieversorgungseinrichtung 13 mit einer daran angeordneten Einspeisungsschnittstelle 14, eine Kommunikationseinrichtung 16, an welche eine Anzeigeeinrichtung 15, eine Alarmierungseinrichtung 18 und eine Datenschnittstelle 17 angeschlossen sind, gezeigt.

Die Betriebs- und Auswerteeinrichtung 8 ist mit der Ansteuereinrichtung 9, der Energieversorgungseinrichtung 13, der Kommunikationseinrichtung 16 verbunden. Die Energieversorgungseinrichtung 13 versorgt die Alarmierungseinrichtung 18, die Anzeigeeinrichtung 15, Ansteuereinrichtung 9, die Kommunikationseinrichtung 16 und die Ansteuereinrichtung 9 mit elektrischer Energie.

An die Alarmierungseinrichtung 18 sind ein optischer Alarmgeber 19 und ein akustischer Alarmgeber 20 angeschlossen.

Die Messküvette 3 umfasst eine Strahlungsquelle 4, einen Gaseinlass 5 mit einem zur Messumgebung 6 angeordneten Schutzelement 7, Heizelemente 10, einen ersten Temperatursensor 11 und einen zweiten Temperatursensor 12, einen Messdetektor 21, ein Messwellenlängenfilterelement 22, einen ersten Referenzdetektor 23 und ein erstes Referenzwellenlängenfilterelement 24. Der erste Temperatursensor 11 und der zweite Temperatursensor 12, der Messdetektor 21, der erste Referenzdetektor 23 sind mit der Betriebs- und Auswerteeinrichtung 8 verbunden. Die Messküvette 3 ist in dieser ersten Messanordnung 1 als eine Multireflexionsmessküvette 3 ausgeführt.

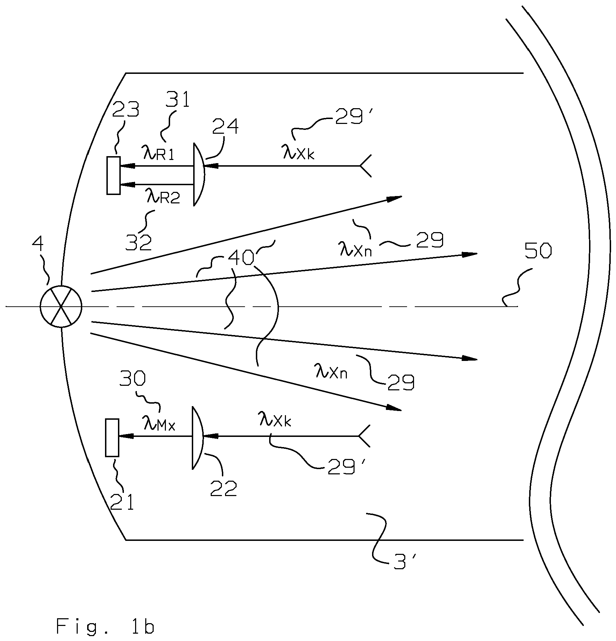

Die Strahlungsquelle 4 emittiert Licht in einem infraroten Wellenlängenbereich $\lambda_{Xn}$ 29 (Figur 1b) in die Messküvette 3, dies Licht wird in der Messküvette 3 mehrfach reflektiert, durch das Zielgas entlang der optischen Wegstrecke der Messküvette 3 absorbiert und gelangt als IR- Licht $\lambda_{Xk}$ 29' (Figur 1b) auf das Messwellenlängenfilterelement 22 und auf das erste Referenzwellenlängenfilterelement 24.

Das Messwellenlängenfilterelement 22 lässt aus dem infraroten Wellenlängenbereich $\lambda_{Xk}$ 29' nur einen Anteil des Lichtes im Bereich der IR- Messwellenlänge $\lambda_{Mx}$ 30 (Figur 1b) zum Messdetektor 21 passieren.

Das erste Referenzwellenlängenfilterelement 24 lässt aus dem infraroten Wellenlängenbereich $\lambda_{Xk}$ 29' (Figur 1b) nur einen Anteil des Lichtes im Bereich der ersten IR-Referenzwellenlänge $\lambda_{Rx1}$ 31 (Figur 1b) und einen Anteil des Lichtes im Bereich der zweiten IR- Referenzwellenlänge $\lambda_{Rx2}$ 32 (Figur 1b) zum ersten Referenzdetektor 23 passieren. In der Betriebs- und Auswerteeinrichtung 8 werden die Signale des Messdetektors 21, korrespondierend zur Intensität der vom ersten Messdetektor 21 erfassten Messwellenlänge $\lambda_{Mx}$ 30 (Figur 1b) und die Signale des ersten Referenzdetektors 23, korrespondierend zur summarischen Intensität der vom ersten Referenzdetektor 23 erfassten ersten Referenzwellenlänge $\lambda_{R1}$ 31 (Figur 1b) und zweiten Referenzwellenlänge $\lambda_{R2}$ 32 (Figur 1b) miteinander in einer Weise kombiniert, dass eine Zielgaskonzentration bestimmt wird. Diese Zielgaskonzentration wird von der Betriebs- und Auswerteeinrichtung 8 an die Kommunikationseinrichtung 16 weitergeleitet, von dort an die Anzeigeeinrichtung 15, Alarmierungseinrichtung 18 und die Datenschnittstelle 17 weitergeleitet. Bei Überschreitungen vorbestimmter Grenzwerte der Zielgaskonzentration werden mittels der Alarmierungseinrichtung 18 über den optischen Alarmgeber 19 und/oder den akustischen Alarmgeber 20 Alarmierungen ausgelöst.

In der Figur 1b ist ein Teilstück 3' der Messküvette 3 nach Figur 1a gezeigt. Gleiche Elemente in der Figur 1a und in der Figur 1b sind mit den gleichen Bezugsziffern versehen wie in der Figur 1a.

Das gezeigte Teilstück 3' zeigt die an einer Seite der Messküvette 3 (Figur 1a) angeordneten messtechnischen Elemente (Strahlungsquelle 4, Messdetektor 21, Messwellenlängenfilterelement 22, erster Referenzdetektor 23, erstes Referenzwellenlängenfilterelement 24).

Die Strahlungsquelle 4 emittiert Licht als im Wesentlichen nicht homogenes Lichtbündel 40 entlang einer optischen Achse 50 in einem infraroten Wellenlängenbereich $\lambda_{Xn}$ 29 in die Messküvette 3 (Figur 1a), dieses Licht wird in der Multireflexionsmessküvette 3 (Figur 1a) mehrfach reflektiert, durch das Zielgas entlang der optischen Wegstrecke der Messküvette 3 (Figur 1a) absorbiert und gelangt als IR-Licht $\lambda_{Xk}$ 29' auf das Messwellenlängenfilterelement 22 und auf das erste Referenzwellenlängenfilterelement 24.

Das Messwellenlängenfilterelement 22 lässt aus dem infraroten Wellenlängenbereich $\lambda_{Xk}$ 29' nur einen Anteil des Lichtes im Bereich der IR-Messwellenlänge $\lambda_{Mx}$ 30 zum Messdetektor 21 passieren.

Das erste Referenzwellenlängenfilterelement 24 lässt aus dem infraroten Wellenlängenbereich $\lambda_{Xk}$ 29' nur einen Anteil Lichtes im Bereich der ersten IR-Referenzwellenlänge $\lambda_{Rx1}$ 31 und einen Anteil Lichtes im Bereich der zweiten IR-Referenzwellenlänge $\lambda_{Rx2}$ 32 zum ersten Referenzdetektor 23 passieren.

Der Messdetektor 22 und der Referenzdetektor 23 sind mit der Betriebs- und Auswerteeinrichtung 8 (Figur 1a) verbunden, sodass die Signale des Messdetektors 22 und der Referenzdetektors 23 in der Betriebs- und Auswerteeinrichtung 8 (Figur 1a) ausgewertet werden können, um eine Zielgaskonzentration unter Kompensation des Einflusses der im Zielgas vorhandenen Feuchtigkeit zu ermitteln.

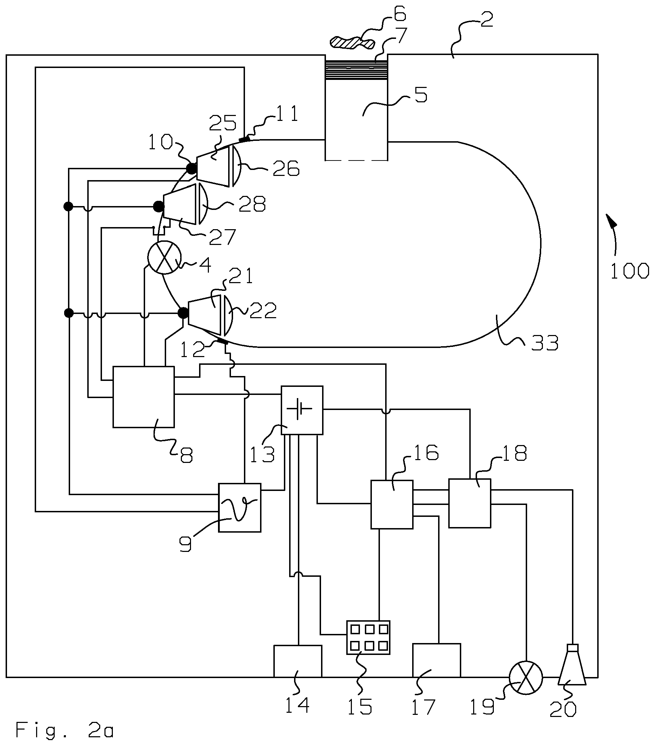

In der Figur 2a ist eine zweite Messanordnung 100 zur infrarot-optischen Messung von Gasen und Gasgemischen mit Kompensation von Umgebungseinflüssen gezeigt. Gleiche Elemente in der Figur 2a und in der Figur 1a sind mit den gleichen Bezugsziffern versehen wie in der Figur 1a.

Die zweite Messanordnung 100 ist mit einem Gehäuse 2, mit einer Messküvette 33, einer Betriebs- und Auswerteeinrichtung 8, einer Ansteuereinrichtung 9, einer Energieversorgungseinrichtung 13 mit einer daran angeordneten Einspeisungsschnittstelle 14, einer Kommunikationseinrichtung 16, an welche eine Anzeigeeinrichtung 15, eine Alarmierungseinrichtung 18 und eine Datenschnittstelle 17 angeschlossen sind, gezeigt.

Die Betriebs- und Auswerteeinrichtung 8 ist mit der Ansteuereinrichtung 9, der Energieversorgungseinrichtung 13, der Kommunikationseinrichtung 16 verbunden. Die Energieversorgungseinrichtung 13 versorgt die Alarmierungseinrichtung 18, die Anzeigeeinrichtung 15, Ansteuereinrichtung 9, die Kommunikationseinrichtung 16 und die Ansteuereinrichtung 9 mit elektrischer Energie.

An die Alarmierungseinrichtung 18 sind ein optischer Alarmgeber 19 und ein akustischer Alarmgeber 20 angeschlossen. Die Messküvette 33 ist in dieser zweiten Messanordnung 100 als eine Multireflexionsmessküvette 3 ausgeführt.

Die Messküvette 33 umfasst eine Strahlungsquelle 4, einen Gaseinlass 5 mit einem zur Messumgebung 6 angeordneten Schutzelement 7, Heizelemente 10, einen ersten Temperatursensor 11 und einen zweiten Temperatursensor 12, einen Messdetektor 21, ein Messwellenlängenfilterelement 22, einen ersten Referenzdetektor 25, ein erstes Referenzwellenlängenfilterelement 26, einen zweiten Referenzdetektor 27 und ein zweites Referenzwellenlängenfilterelement 28. Der erste Temperatursensor 11 und der zweite Temperatursensor 12, der Messdetektor 21, der erste und der zweite Referenzdetektor 25, 27 sind mit der Betriebs- und Auswerteeinrichtung 8 verbunden.

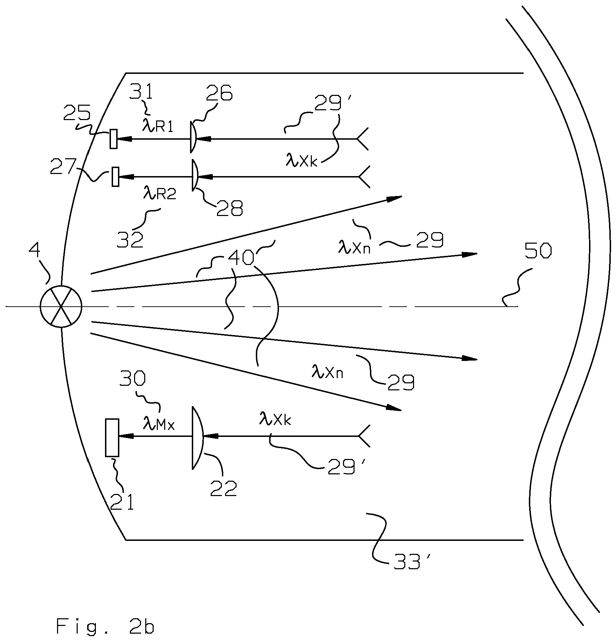

Die Strahlungsquelle 4 emittiert Licht in einem infraroten Wellenlängenbereich $\lambda_{Xn}$ 29 in die Messküvette 3, dieses Licht wird in der Messküvette 3 (Figur 1a) mehrfach reflektiert, durch das Zielgas entlang der optischen Wegstrecke der Messküvette 3 (Figur 1a) absorbiert und gelangt als IR-Licht $\lambda_{Xk}$ 29' auf das Messwellenlängenfilterelement 22, sowie auf das erste Referenzwellenlängenfilterelement 26 und auf das zweite Referenzwellenlängenfilterelement 28. Das Messwellenlängenfilterelement 22 lässt aus dem infraroten Wellenlängenbereich $\lambda_{Xk}$ 29' (Figur 2b) nur einen Anteil des Lichtes im Bereich der IR-Messwellenlänge $\lambda_{Mx}$ 30 (Figur 2b) zum Messdetektor 21 passieren.

Das erste Referenzwellenlängenfilterelement 26 lässt aus dem infraroten Wellenlängenbereich $\lambda_{Xk}$ 29' (Figur 2b) nur einen Anteil des Lichtes im Bereich der ersten IR-Referenzwellenlänge $\lambda_{Rx1}$ 31 (Figur 2b) zum ersten Referenzdetektor 25 passieren.

Das zweite Referenzwellenlängenfilterelement 28 lässt aus dem infraroten Wellenlängenbereich $\lambda_{Xk}$ 29' (Figur 2b) nur einen Anteil des Lichtes im Bereich der zweiten IR-Referenzwellenlänge $\lambda_{Rx2}$ 32 (Figur 2b) zum zweiten Referenzdetektor 27 passieren.

In der Betriebs- und Auswerteeinrichtung 8 werden die Signale des Messdetektors 21, korrespondierend zur Intensität der vom ersten Messdetektor 21 erfassten Messwellenlänge $\lambda_{Mx}$ 30 (Figur 2b) und die Signale des ersten Referenzdetektors 25, korrespondierend zur Intensität der vom ersten Referenzdetektor 25 erfassten ersten Referenzwellenlänge $\lambda_{Rx1}$ 31 (Figur 2b) und die Signale des zweiten Referenzdetektors 27, korrespondierend zur Intensität der vom zweiten Referenzdetektor 27 erfassten zweiten Referenzwellenlänge $\lambda_{Rx2}$ 32 (Figur 2b) miteinander in einer Weise kombiniert, dass eine Zielgaskonzentration bestimmt wird. Diese Zielgaskonzentration wird von der Betriebs- und Auswerteeinrichtung 8 an die Kommunikationseinrichtung 16 weitergeleitet, von dort an die Anzeigeeinrichtung 15, Alarmierungseinrichtung 18 und die Datenschnittstelle 17 weitergeleitet. Bei Überschreitungen vorbestimmter Grenzwerte der Zielgaskonzentration werden mittels der Alarmierungseinrichtung 18 über den optischen Alarmgeber 19 und/oder den akustischen Alarmgeber 20 Alarmierungen ausgelöst.

In der Figur 2b ist ein Teilstück 33' der Messküvette 33 nach Figur 2a gezeigt. Gleiche Elemente in der Figur 2a und in der Figur 2b sind mit den gleichen Bezugsziffern versehen wie in der Figur 2a.

Das gezeigte Teilstück 33' zeigt die an einer Seite der Messküvette 33 (Figur 2a) angeordneten messtechnischen Elemente (Strahlungsquelle 4, Messdetektor 21, Messwellenlängenfilterelement 22, erster Referenzdetektor 25, erstes Referenzwellenlängenfilterelement 26, zweiter Referenzdetektor 27, zweites Referenzwellenlängenfilterelement 28).

Die Strahlungsquelle 4 emittiert Licht als im Wesentlichen nicht homogenes Lichtbündel 40 entlang einer optischen Achse 50 in einem infraroten Wellenlängenbereich $\lambda_{Xn}$ 29 in die Messküvette 33 (Figur 2a).

Dies Licht wird in der Multireflexionsmessküvette 33 (Figur 2a) mehrfach reflektiert, durch das Zielgas entlang der optischen Wegstrecke der Messküvette 33 (Figur 2a) absorbiert und gelangt als IR-Licht $\lambda_{Xk}$ 29' auf das Messwellenlängenfilterelement 22 und auf das erste Referenzwellenlängenfilterelement 26 und auf das zweite Referenzwellenlängenfilterelement 28.

Das Messwellenlängenfilterelement 22 lässt aus dem infraroten Wellenlängenbereich $\lambda_{Xk}$ 29' nur einen Anteil Lichtes im Bereich der IR-Messwellenlänge $\lambda_{Mx}$ 30 zum Messdetektor 21 passieren.

Das erste Referenzwellenlängenfilterelement 26 lässt aus dem infraroten Wellenlängenbereich $\lambda_{Xk}$ 29' nur einen Anteil des Lichtes im Bereich der ersten IR-Referenzwellenlänge $\lambda_{Rx1}$ 31 zum ersten Referenzdetektor 25 passieren.

Das zweite Referenzwellenlängenfilterelement 28 lässt aus dem infraroten Wellenlängenbereich $\lambda_{Xk}$ 29' nur einen Anteil des Lichtes im Bereich der zweiten IR-Referenzwellenlänge $\lambda_{R2}$ 32 zum zweiten Referenzdetektor 27 passieren.

Der Messdetektor 22 und der erste und zweite Referenzdetektor 25, 27 sind mit der Betriebs- und Auswerteeinrichtung 8 (Figur 1a) verbunden, sodass die Signale des Messdetektors 22 und der Referenzdetektoren 25, 27 in der Betriebs- und Auswerteeinrichtung 8 (Figur 1a) ausgewertet werden können, um eine Zielgaskonzentration unter Kompensation des Einflusses der im Zielgas vorhandenen Feuchtigkeit zu ermitteln.

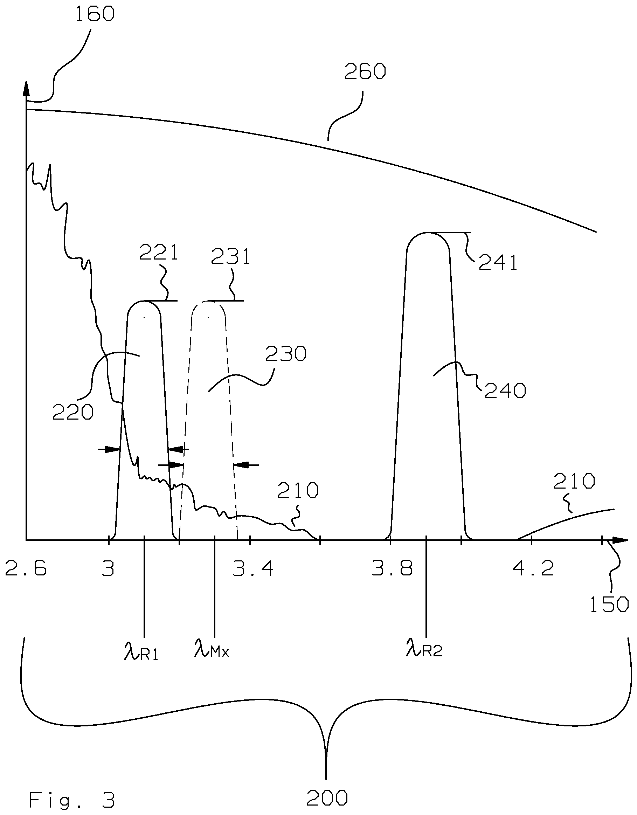

In der Figur 3 ist eine Darstellung der verwendeten Messwellenlängen, der Referenzwellenlängen der Messanordnung 1 nach den Figuren 1a, 1b und der Messanordnung 100 nach den Figuren 2a, 2b gezeigt.

Auf einer Abszisse (X-Achse) 150 ist in linearer Skalierung ein Wellenlängenbereich 200 von 2800 nm bis zu 4400 nm dargestellt.

Über diesem Wellenlängenbereich 200 ist auf einer Ordinate (Y-Achse) 160 eine Absorption 210 von Wasser und/oder Feuchtigkeit aus der Messumgebung 6 (Figur 1a, Figur 2a), eine Transmission 220 des ersten Referenzwellenlängenfilterelementes 24 (Figur 1a, Figur 1b) bzw. des ersten Referenzwellenlängenfilterelementes 26 (Figur 2a, Figur 2b) an der ersten Referenzwellenlänge, eine Transmission 240 des ersten Referenzwellenlängenfilterelementes 24 (Figur 1a, Figur 1b) bzw. des zweiten Referenzwellenlängenfilterelementes 28 (Figur 2a, Figur 2b) an der zweiten Referenzwellenlänge, eine - gestrichelt dargestellte - Transmission 230 des ersten Messwellenlängenfilterelementes 22 (Figur 1a, Figur 1b, Figur 2a, Figur 2b) an der Messwellenlänge sowie die Emission 260 der Strahlungsquelle 4 (Figuren 1a, 1b, 1c, 1d) dargestellt.

Die Darstellung der Transmissionen 220, 230, 240 erfolgt in dieser Figur 3 ohne einen Einfluss einer Absorption durch das Zielgas im Wellenlängenbereich 200.

Die Transmission 220 ist mit einem Maximalwert der Transmission 221 bei der Referenzwellenlänge $\lambda_{R1}$ von 3100 nm gezeigt.

Die Transmission 240 ist mit einem Maximalwert der Transmission 241 bei der Referenzwellenlänge $\lambda_{R2}$ von 3900 nm gezeigt. Die Transmission 230 ist mit einem Maximalwert der Transmission 221 bei der Messwellenlänge $\lambda_{Mx}$ 30 von 3300 nm gezeigt. Weiterhin sind in und an den dargestellten Transmissionen 220, 230, 240 nach dieser Figur 3 die jeweilige mittlere Transmissionswellenlänge mit zugehöriger Bandbreite in schematisch vereinfachter Form abgebildet.

Die Transmission 220 an der ersten Referenzwellenlänge $\lambda_{R1}$ weist eine Bandbreite von ungefähr 90 nm symmetrisch zum Maximalwert 221 an der ersten Wellenlänge $\lambda_{R1}$ auf. Die Transmission 240 an der zweiten Referenzwellenlänge $\lambda_{R2}$ weist eine Bandbreite von ungefähr 120 nm symmetrisch zum Maximalwert 241 an der zweiten Referenzwellenlänge $\lambda_{R2}$ auf.

Die Transmission 230 an der Messwellenlänge $\lambda_{Mx}$ weist eine Bandbreite 232 von ungefähr 100 nm symmetrisch zum Maximalwert 231 an der Messwellenlänge $\lambda_{Mx}$ 30 auf.

Die Wahl der Bandbreiten und der Maximalwerte der Transmission 221, 241 des ersten Referenzwellenlängenfilterelementes 24 (Figur 1a, 1b) an den Referenzwellenlängen $\lambda_{R1}$, $\lambda_{R2}$, berücksichtigt für eine Messanordnung 1 nach Figur 1a und Figur 1b, sowohl den über dem Wellenlängenbereich 200 abfallenden Verlauf der Absorption 210 von Wasser und Feuchtigkeit, wie auch den über dem Wellenlängenbereich 200 abfallenden Verlauf der Emission der Strahlungsquelle 4 (Figur 1a, 1b) in der Weise, dass sich summarisch als Signal am ersten Referenzdetektor 23 (Figur 1a, Figur 1b) der gleiche Effekt durch die Absorption 210 von Wasser und Feuchtigkeit ergibt, wie am Messdetektor 21 (Figur 1a, Figur 1b) im Zusammenspiel mit dem Messwellenlängenfilterelement 22 (Figur 2a, Figur 2b).

Die Wahl der Bandbreiten und der Maximalwerte der Transmission 221, 241 der Referenzwellenlängenfilterelemente 26, 28 (Figur 2a, 2b) an den Referenzwellenlängen $\lambda_{R1}$, $\lambda_{R2}$, berücksichtigt für eine Messanordnung 100 nach Figur 2a und Figur 2b, sowohl den über dem Wellenlängenbereich 200 abfallenden Verlauf der Absorption 210 von Wasser und Feuchtigkeit, wie auch den über dem Wellenlängenbereich 200 abfallenden Verlauf der Emission der Strahlungsquelle 4 (Figur 2a, 2b) in der Weise, dass sich summarisch als Signal am ersten und am zweiten Referenzdetektor 25, 27 (Figur 2a, Figur 2b) der gleiche Effekt durch die Absorption 210 von Wasser und Feuchtigkeit ergibt, wie am Messdetektor 21 (Figur 2a, Figur 2b) im Zusammenspiel mit dem Messwellenlängenfilterelement 22. (Figur 2a, Figur 2b).

Bezugsziffernliste:

| | |
|---|---|
| 1 | erste Messanordnung |
| 2 | Gehäuse |
| 3 | Messküvette |
| 4 | Strahlungsquelle |
| 5 | Gaseinlass |
| 6 | Messumgebung |
| 7 | Schutzelement |
| 8 | Betriebs- und Auswerteeinrichtung |
| 9 | Ansteuereinrichtung |
| 10 | Heizelemente |
| 11 | Erster Temperatursensor |
| 12 | Zweiter Temperatursensor |
| 13 | Energieversorgungseinrichtung |
| 14 | Einspeisungsschnittstelle |
| 15 | Anzeigeeinrichtung |
| 16 | Kommunikationseinrichtung |
| 17 | Datenschnittstelle |
| 18 | Alarmierungseinrichtung |
| 19 | Optischer Alarmgeber |
| 20 | Akustischer Alarmgeber |
| 21 | Messdetektor |
| 22 | Messwellenlängenfilterelement |
| 23 | Erster Referenzdetektor |
| 24 | Erstes Referenzwellenlängenfilterelement |
| 25 | Erster Referenzdetektor |
| 26 | Erstes Referenzwellenlängenfilterelement |
| 27 | Zweiter Referenzdetektor |
| 28 | Zweites Referenzwellenlängenfilterelement |
| 29 | IR- Wellenlängenbereich $\lambda_{Xn}$ |
| 29' | IR- Wellenlängenbereich $\lambda_{Xk}$ |
| 30 | IR- Messwellenlänge $\lambda_{Mx}$ |
| 31 | Erste IR-Referenzwellenlänge |
| 32 | Zweite IR-Referenzwellenlänge $\lambda_{Rx2}$ |
| 33 | Messküvette |
| 40 | Lichtbündel |
| 50 | optische Achse |
| 100 | zweite Messanordnung |
| 150 | Abszisse (X-Achse) |
| 160 | Ordinate (Y-Achse) |
| 200 | Wellenlängenbereich |
| 210 | Absorption von Wasser und/oder Feuchtigkeit |
| 220 | Transmission des ersten oder ersten Referenzwellenlängenfilterelementes |
| 221 | Maximalwert der Transmission des ersten oder ersten Referenzwellenlängenfilterelementes |

230    Transmission des Messwellenlängenfilterelementes
231    Maximalwert der Transmission des Messwellenlängenfilterelementes

240    Transmission des ersten oder zweiten Referenzwellenlängenfilterelementes
241    Maximalwert der Transmission des ersten oder zweiten Referenzwellenlängenfilterelementes
260    Emission der Strahlungsquelle

**Patentansprüche**

1. Vorrichtung zur optischen Erfassung eines Zielgases in Luftgasgemischen mit
   einer Betriebs- und Auswerteeinrichtung (8),
   einer Messküvette (3), die als Multireflexionsmessküvette mit innenwandig optisch reflektierenden Oberflächen ausgeführt ist und einen Gaseinlass (5) aufweist, der ausgebildet ist, mit einer Messumgebung (6) Gase und Gasgemische auszutauschen,
   einer Strahlungsquelle (4), die ausgebildet ist, Licht im infraroten Bereich in die Messküvette (3) zu emittieren, einem Messdetektor (21) und
   einer Referenzdetektoreinrichtung (23, 25, 27),
   wobei der Messdetektor (21) und die Referenzdetektoreinrichtung (23, 25, 27) ausgebildet sind, das Licht der Strahlungsquelle (4) zu erfassen und in elektrische Signale umzuwandeln, die mit der Intensität des erfassten Lichtes korrespondieren,
   wobei vor dem Messdetektor (21) ein optisches Bandpass-Filterelement (22) angeordnet ist, das ausgebildet ist, Licht mit einer Messwellenlänge im infraroten Bereich durchzulassen,
   wobei die Betriebs- und Auswerteeinrichtung (8) ausgebildet ist, die Strahlungsquelle (4) zu betreiben und die elektrischen Signale der Messdetektors (21) und der Referenzdetektoreinrichtung (23, 25, 27) zu erfassen,
   wobei vor der Referenzdetektoreinrichtung (23, 25, 27) eine optische Doppelbandpass-Filtereinrichtung (24, 26, 28) angeordnet ist, die ausgebildet ist, im infraroten Bereich Licht einer ersten Referenzwellenlänge (31) und Licht einer zweiten Referenzwellenlänge (32) durchzulassen, wobei die erste und die zweite Referenzwellenlänge und jeweils die zugehörige Bandbreite und der Maximalwert der Transmission für die erste und die zweite Referenzwellenlänge so gewählt sind, dass keine Signalverminderungen durch das Zielgas oder durch ein anderes Gas aus der Messumgebung gegeben ist, und die erste und die zweite Referenzwellenlänge und jeweils die zugehörige Bandbreite und der Maximalwert der Transmission für die erste und die zweite Referenzwellenlänge weiterhin so gewählt sind, dass Umwelteinflüsse, nämlich der direkte Einfluss von Luftfeuchtigkeit und der durch den Salzgehalt bedingte indirekte Einfluss von Luftfeuchtigkeit, summarisch den gleichen Einfluss als Signalverminderung ergeben, der dem Einfluss als Signalverminderung an der Messwellenlänge gleich ist, und
   wobei die Betriebs- und Auswerteeinrichtung (8) ausgebildet ist, aus dem der ersten Referenzwellenlänge (31) zugehörigen Signal, dem der zweiten Referenzwellenlänge (32) zugehörigen Signal und dem der Messwellenlänge (30) zugehörigen Signal den Einfluss der Luftfeuchtigkeit im Luftgasgemisch unter Einbeziehung der spektralen Emissionscharakteristik der Strahlungsquelle und unter Einbeziehung der spektralen Messempfindlichkeitskennlinie des Messdetektors (21) und unter Einbeziehung der spektralen Messempfindlichkeitskennlinie der Referenzdetektoreinrichtung (23, 25, 27) und unter Einbeziehung der spektralen Transmissionseigenschaften des optischen Bandpassfilterelementes (22) und der spektralen Transmissionseigenschaften der optischen Doppelbandpass-Filtereinrichtung (24, 26, 28) zu kompensieren und eine Zielgaskonzentration zu ermitteln.

2. Vorrichtung nach Anspruch 1, wobei das von der Strahlungsquelle (4) abgestrahlte Licht nach mindestens einmaliger Reflexion an den reflektierenden Oberflächen der Messküvette (3) zum Messdetektor (21) und zur Referenzdetektoreinrichtung (23, 25, 27) gelangt.

3. Vorrichtung nach einem der Ansprüche 1 bis 2, wobei die Referenzdetektoreinrichtung als ein Referenzdetektor (23) ausgebildet ist und
   wobei die optische Doppelbandpass-Filtereinrichtung als ein Doppelbandpass-Filterelement (24) ausgebildet ist, das Licht der ersten Referenzwellenlänge (31) und Licht der zweiten Referenzwellenlänge (32) durchlässt.

4. Vorrichtung nach einem der Ansprüche 1 bis 2, wobei die die Referenzdetektoreinrichtung einen ersten Referenzdetektor (25) und zweiten Referenzdetektor (27) aufweist, wobei die optische Doppelbandpass-Filtereinrichtung ein erstes Referenzwellenlängenfilterelement (26) und ein zweites Referenzwellenlängenfilterelement (28) aufweist, wobei das erste Referenzwellenlängenfilterelement (26) Licht im Bereich der ersten Referenzwellenlänge zum ersten Referenzdetektor (25) passieren lässt und

wobei das zweite Referenzwellenlängenfilterelement (28) Licht im Bereich der zweiten Referenzwellenlänge zum zweiten Referenzdetektor (27) passieren lässt.

5. Vorrichtung nach einem der Ansprüche 1 bis 3, wobei das optische Bandpass-Filterelement (22) und/oder die Doppelbandpass-Filtereinrichtung (24, 26, 28) und/oder das Doppelbandpass-Filterelement (24) und/oder das erste Referenzwellenlängenfilterelement (26) und/oder das zweite Referenzwellenlängenfilterelement (28) als ein optisches Interferenzfilter oder ein diffraktives optisches Element ausgeführt sind.

6. Vorrichtung nach einem der Ansprüche 1 bis 5, wobei Temperatursensoren (11, 12) vorgesehen sind, welche ausgebildet sind, Temperaturen der Wandung der Messküvette (3), des Messdetektors (21) und der Referenzdetektoreinrichtung (23, 25, 27) zu erfassen.

7. Vorrichtung nach einem der Ansprüche 1 bis 6, wobei Heizelemente (10) vorgesehen sind, welche ausgebildet sind, die Wandung der Messküvette (3), den Messdetektor (21) und/oder die Referenzdetektoreinrichtung (23, 25, 27) zu temperieren.

8. Vorrichtung nach einem der Ansprüche 1 bis 7, wobei die Betriebs- und Auswerteeinrichtung (8) mindestens teilweise baulich getrennt von der Messküvette (3) ausgeführt ist und wobei die Vorrichtung mindestens teilweise in einem Gehäuse (2) angeordnet ist, wobei das Gehäuse (2) explosionsgeschützt ausgebildet ist, sodass kein Energieübertrag und kein Funkenübergang aus dem Gehäuse (2) in die Messumgebung (6) stattfinden kann.

9. Vorrichtung nach einem der Ansprüche 1 bis 8, wobei die Strahlungsquelle (4), der Messdetektor (21) und die Referenzdetektoreinrichtung (23, 25, 27) an einer gleichen Seite in der Messküvette (3) angeordnet sind.

10. Vorrichtung nach einem der Ansprüche 1 bis 9, wobei zur Messumgebung (6) hin am Gaseinlass (5) ein Schutzelement (7) angeordnet ist, welches ausgebildet ist, den Übertritt von Verunreinigungen aus der Messumgebung (6) in die Messküvette (3) und/oder den Übertritt von Energiemengen aus der Messküvette (3) in die Messumgebung (6) zu verhindern.

11. Vorrichtung nach einem der Ansprüche 1 bis 10, wobei die Messwellenlänge (30) eine Wellenlänge von 3300 nm aufweist, wobei die erste Referenzwellenlänge (31) eine Wellenlänge von 3100 nm aufweist, wobei die zweite Referenzwellenlänge (32) eine Wellenlänge von 3900 nm aufweist und wobei die optische Doppelbandpass-Filtereinrichtung (24, 26, 28) Licht im Wellenlängenbereich von 3000 nm bis 3200 nm und Licht im Wellenlängenbereich von 3800 nm bis 4000 nm zur Referenzdetektoreinrichtung (23, 25, 27) passieren lässt.

12. Vorrichtung nach einem der Ansprüche 1 bis 11, wobei das optische Bandpass-Filterelement (22) Licht im Wellenlängenbereich von 3200 nm bis 3500 nm zum Messdetektor (21) passieren lässt.

13. Vorrichtung nach einem der Ansprüche 1 bis 12, wobei die Strahlungsquelle (4) Licht im infraroten Bereich von 2000 nm bis 5000 nm abstrahlt und wobei vor der Strahlungsquelle (4) ein Filterelement angeordnet ist, das ausgebildet ist, das von der Strahlungsquelle (4) abgestrahlte Licht zu fokussieren und/oder Licht in einem Wellenlängenbereich von 3000 nm bis 4000 nm passieren zu lassen.

## Claims

1. Device for the optical detection of a target gas in air gas mixtures, the device comprising
an operating and analyzing unit (8);
a measuring cuvette (3) which is formed as a multireflection measuring cuvette with optically reflecting surfaces on the inner walls and which comprises a gas inlet (5) which is adapted to exchange gases and gas mixture with a measurement environment (6);
a radiation source (4) adapted to emit light in the infrared range into the measuring cuvette (3);
a measuring detector (21); and
a reference detector unit (23, 25, 27);
wherein the measuring detector (21) and the reference detector unit (23, 25, 27) are adapted to detect the light of the radiation source (4) and to convert it into electrical signals which correspond to the intensity of the detected light;
wherein an optical band pass filter element is arranged in front of the reference detector unit (23, 25, 27) and is designed to transmit light of a measurement wavelength in the infrared range;

wherein the operating and analyzing unit (8) is adapted to operate the radiation source (4) and to detect the electrical signals of the measuring detector (21) and of the reference detector unit (23, 25, 27);

wherein an optical double band pass filter unit (24, 26, 28) is arranged in front of the reference detector unit (23, 25, 27) and is designed to transmit in the infrared range light of a first reference wavelength (31) and light of a second reference wavelength (32), wherein the first and the second reference wavelength and the associated band width and the maximum value of the transmission for the first and second reference wavelength are chosen such that no signal reduction is caused by the target gas or by another gas of the measurement environment, and that the first and second reference wavelength and the associated band width and the maximum value of the transmission are further chosen such that environmental effects, namely the direct influence of atmospheric humidity and the indirect effect of atmospheric humidity caused by salt content, summarily have the same effect as a signal reduction which is equal to the effect as a signal reduction at the measurement wavelength; and

wherein the operating and analyzing unit (8) is arranged to determine, from the signal associated with the first reference wavelength (31), from the signal associated with the second reference wavelength (32), and from the signal associated with the measurement wavelength (30), taking into account the spectral emission characteristic of the radiation source and taking into account the spectral measuring sensitivity characteristic curve of the measuring detector (21), and taking into account the spectral measuring sensitivity characteristic curve of the reference detector unit (23, 25, 27), and taking into account the spectral transmission characteristics of the optical band pass filter element (20) and the spectral transmission characteristics of the optical double band pass filter unit (24, 26, 28), the effect of atmospheric humidity in the air gas mixture and to compensate it, and to determine a target gas concentration.

2. A device according to claim 1, wherein the light emitted by the radiation source (4) reaches the measuring detector (21) and the reference detector unit (23, 25, 27) after at least one-time reflection at the reflecting surfaces of the measuring cuvette (3).

3. A device according to any of the claims 1 to 2, wherein the reference detector unit is designed as reference detector (23); and

the optical double band pass filter unit is designed as a double band pass filter element (24) which transmits light of the first reference wavelength (31) and light of the second reference wavelength (32).

4. A device according to any of the claims 1 to 2, wherein the reference detector unit has a first reference detector (25) and a second reference detector (27);

wherein the optical double band pass filter unit has a first reference wavelength filter element (26) and a second reference wavelength element (28);

wherein the first reference wavelength filter element (26) transmits light in the range of the first reference wavelength to the first reference detector (25); and

wherein the second reference wavelength filter element (28) transmits light in the range of the second reference wavelength to the second reference detector (27).

5. A device according to any of the claims 1 to 3, wherein the optical band pass filter element (22) and/or the double band pass filter unit (24, 26, 28) and/or the double band pass filter element (24) and/or the first reference wavelength filter element (26) and/or the second reference wavelength filter element (28) are designed as an optical interference filter or as a diffractive optical element.

6. A device according to any of the claims 1 to 5, wherein temperature sensors (11, 12) are provided which are adapted to detect temperatures of the wall of the measuring cuvette (3), of the measuring detector (21) and of the reference detector unit (23, 25, 27).

7. A device according to any of the claims 1 to 6, wherein heating elements (10) are provided which are adapted to temper the wall of the measuring cuvette (3), the measuring detector (21) and/or the reference detector unit (23, 25, 27).

8. A device according to any of the claims 1 to 7, wherein the operating and analyzing unit (8) is at least partly structurally separate from the measuring cuvette (3), and wherein the device is at least partly accommodated in a housing (2), wherein the housing (2) has an explosion-proof design, so that no transfer of energy and no flashover sparks from the housing (2) into the measurement environment (6) can take place.

9. A device according to any of the claims 1 to 8, wherein the radiation source (4), the measuring detector (21) and the reference detector unit (23, 25, 27) are arranged on the same side in the measuring cuvette (3).

10. A device according to any of the claims 1 to 9, wherein a protective element (7) is arranged at the gas inlet (5) towards the measurement environment (6), the protective element being designed to prevent the transfer of contaminants from the measurement environment (6) into the measuring cuvette (3) and/or the transfer of quantities of energy from the measuring cuvette into the measurement environment (6).

11. A device according to any of the claims 1 to 10, wherein the measurement wavelength has a wavelength of 3300 nm, wherein the first reference wavelength (31) has a wavelength of 3100 nm, wherein the second reference wavelength (32) has a wavelength of 3900 nm, and wherein the optical double band pass filter unit (24, 26, 28) transmits light in the wavelength range of 3000 nm to 3200 nm and light in the wavelength range of 3800 nm to 4000 nm to the reference detector unit (23, 25, 27).

12. A device according to any of the claims 1 to 11, wherein the optical band pass filter element (22) transmits light in the wavelength range of 3200 nm to 3500 nm to the measuring detector (21).

13. A device according to any of the claims 1 to 12, wherein the radiation source (4) emits light in the infrared range of 2000 nm to 5000 nm, and wherein in front of the radiation source (44) a filter element is arranged which is designed to focus light emitted by the radiation source (4) and/or to transmit light in a wavelength range of 3000 nm to 4000 nm.

## Revendications

1. Dispositif destiné à la saisie optique d'un gaz cible dans des mélanges de gaz de l'air avec
   un appareil d'actionnement et d'analyse (8),
   une cuvette de mesure (3), qui est réalisée en tant que cuvette de mesure multi-reflets avec des surfaces optiques réfléchissantes sur l'intérieur des parois et présente une entrée de gaz (5) qui est formée pour échanger des gaz et des mélanges de gaz avec un environnement de mesure (6),
   une source de rayonnement (4) qui est formée pour émettre de la lumière dans la portée infrarouge dans la cuvette de mesure (3),
   un détecteur de mesure (21) et
   un appareil détecteur de référence (23, 25, 27),
   dans lequel le détecteur de mesure (21) et l'appareil détecteur de référence (23, 25, 27) sont formés de façon à capter la lumière de la source de rayonnement (4) et de la transformer en signal électrique qui correspond à l'intensité de la lumière captée,
   dans lequel un élément filtre passe-bande (22) optique, qui est formé pour laisser passer la lumière avec une longueur d'onde de mesure dans la portée infrarouge, est agencé devant le détecteur de mesure (21),
   dans lequel l'appareil d'actionnement et d'analyse (8) est formé de façon à exploiter la source de rayonnement (4) et à capter les signaux électriques du détecteur de mesure (21) et de l'appareil détecteur de référence (23, 25, 27),
   dans lequel un appareil filtre double passe-bande (24, 26, 28) optique, qui est formé de façon à laisser passer, dans la portée infrarouge, la lumière d'une première longueur d'onde de référence (31) et la lumière d'une seconde longueur d'onde de référence (32), est agencé devant l'appareil détecteur de référence (23, 25, 27), dans lequel la première et la seconde longueurs d'onde de référence et respectivement la bande passante associée et la valeur maximale de la transmission pour la première et la seconde longueurs d'onde de référence sont choisies de sorte qu'aucune diminution de signal ne soit obtenu par le gaz cible ou par un autre gaz à partir de l'environnement de mesure, et la première et la seconde longueurs d'onde de référence et respectivement la bande passante associée et la valeur maximale de la transmission pour la première et la seconde longueurs d'onde de référence sont en outre choisies de sorte que les influences environnementales, notamment l'influence directe de l'humidité de l'air et l'influence indirecte de l'humidité de l'air conditionnée par la salinité, montrent sommairement la même influence en tant que diminution de signal qui est égale à l'influence en tant que diminution de signal au niveau de la longueur d'onde de mesure, et
   dans lequel l'appareil d'actionnement et d'analyse (8) est formé pour compenser, à partir du signal associé à la première longueur d'onde de référence (31), du signal associé à la deuxième longueur d'onde de référence (32) et du signal associé à la longueur d'onde de mesure (30), l'influence de l'humidité dans le mélange de gaz de l'air compte tenu de la caractéristique spectrale d'émission de la source de rayonnement et compte tenu de la courbe caractéristique de sensibilité de mesure spectrale du détecteur de mesure (21) et compte tenu de la courbe caractéristique de sensibilité de mesure spectrale de l'appareil détecteur de référence (23, 25, 27) et compte tenu des propriétés spectrales de transmission de l'élément filtre passe-bande (22) optique et des propriétés spectrales de transmission de l'appareil filtre double passe-bande (24, 26, 28) optique et pour déterminer une concentration de gaz cible.

2. Appareil selon la revendication 1, dans lequel la lumière rayonnée par la source de rayonnement (4) parvient, au niveau de la surface réfléchissante de la cuvette de mesure (3), au détecteur de mesure (21) et à l'appareil détecteur de référence (23, 25, 27), après au moins une réflexion unique.

3. Appareil selon l'une quelconque des revendications 1 à 2, dans lequel l'appareil détecteur de référence est formé en tant que détecteur de référence (23) et
dans lequel l'appareil filtre double passe-bande optique est formé en tant qu'élément filtre double passe-bande (24) qui laisse passer la lumière de la première longueur d'onde de référence (31) et la lumière de la seconde longueur d'onde de référence (32).

4. Appareil selon l'une quelconque des revendications 1 à 2, dans lequel l'appareil détecteur de référence présente un premier détecteur de référence (25) et un second détecteur de référence (27),
dans lequel l'appareil filtre double passe-bande optique présente un premier élément filtre de longueur d'onde de référence (26) et un second élément filtre de longueur d'onde de référence (28),
dans lequel le premier élément filtre de longueur d'onde de référence (26) laisse passer la lumière dans la portée de la première longueur d'onde de référence jusqu'au premier détecteur de référence (25) et
dans lequel le second élément filtre de longueur d'onde de référence (28) laisse passer la lumière dans la portée de la seconde longueur d'onde de référence jusqu'au second détecteur de référence (27).

5. Appareil selon l'une quelconque des revendications 1 à 3, dans lequel l'élément filtre passe-bande (22) optique et/ou l'appareil filtre double passe-bande (24, 26, 28) et/ou l'élément filtre double passe-bande (24) et/ou le premier élément filtre de longueur d'onde de référence (26) et ou le second élément filtre de longueur d'onde de référence (28) sont conçus en tant que filtre optique interférentiel ou en tant qu'élément optique diffractif.

6. Appareil selon l'une quelconque des revendications 1 à 5, dans lequel des capteurs de température (11, 12) sont prévus, lesquels sont formés pour capter des températures de conversion de la cuvette de mesure (3), du détecteur de mesure (21) et de l'appareil détecteur de référence (23, 25 27).

7. Appareil selon l'une quelconque des revendications 1 à 6, dans lequel des éléments chauffants (10) sont prévus, lesquels sont formés pour tempérer la conversion de la cuvette de mesure (3), du détecteur de mesure (21) et/ou de l'appareil détecteur de référence (23, 25 27).

8. Appareil selon l'une quelconque des revendications 1 à 7, dans lequel l'appareil d'actionnement et d'analyse (8) est réalisé au moins en partie de manière structurellement séparée par rapport à la cuvette de mesure (3) et dans lequel l'appareil est agencé au moins en partie dans un boîtier (2), dans lequel le boîtier (2) est formé de manière protégée contre l'explosion, de sorte qu'aucun transfert d'énergie et qu'aucun transfert d'étincelles à partir du boîtier (2) ne puisse avoir lieu dans l'environnement de mesure (6).

9. Appareil selon l'une quelconque des revendications 1 à 8, dans lequel la source de rayonnement (4), le détecteur de mesure (21) et l'appareil détecteur de référence (23, 25, 27) sont agencés d'un même côté dans la cuvette de mesure (3).

10. Appareil selon l'une quelconque des revendications 1 à 9, dans lequel un élément de protection (7) est agencé jusqu'à l'environnement de mesure (6) au niveau de l'entrée de gaz (5), lequel est formé pour empêcher le passage d'impuretés provenant de l'environnement de mesure (6) dans la cuvette de mesure (3) et/ou le passage de quantités d'énergie provenant de la cuvette de mesure (3) dans l'environnement de mesure (6).

11. Appareil selon l'une quelconque des revendications 1 à 10, dans lequel la longueur d'onde de mesure (30) présente une longueur d'onde de 3 300 nm, dans lequel la première longueur d'onde de référence (31) présente une longueur d'onde de 3 100 nm, dans lequel la seconde longueur d'onde de référence (32) présente une longueur d'onde de 3 900 nm et dans lequel l'appareil filtre double passe-bande (24, 26, 28) optique laisse passer de la lumière dans la portée de longueur d'onde de 3 000 nm à 3 200 nm et de la lumière dans la portée de longueur d'onde de 3 800 nm à 4 000 nm jusqu'à l'appareil détecteur de référence (23, 25, 27).

12. Appareil selon l'une quelconque des revendications 1 à 11, dans lequel l'élément filtre passe-bande (22) optique laisse passer de la lumière dans la portée de longueur d'onde de 3 200 nm à 3 500 nm jusqu'au détecteur de mesure (21).

13. Appareil selon l'une quelconque des revendications 1 à 12, dans lequel la source de rayonnement (4) rayonne de la lumière dans la portée infrarouge de 2 000 nm à 5 000 nm et dans lequel un élément de filtre est agencé devant la source de rayonnement (4), lequel est formé pour focaliser de la lumière rayonnée par la source de rayonnement (4) et/ou pour laisser passer de la lumière dans une portée de longueur d'onde de 3 000 nm à 4 000 nm.

Fig. 1a

**EP 2 726 847 B1**

Fig. 1b

26

Fig. 2a

Fig. 2b

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6455854 B1
- US 5923035 B1
- US 7406854 B1
- US 7285782 B1
- WO 2006068781 A2
- WO 2010118748 A1
- EP 0930496 A2
- US 6469303 B1